(19) **Europäisches Patentamt**
**European Patent Office**
**Office européen des brevets**

(11) **EP 1 098 729 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**02.09.2009 Patentblatt 2009/36**

(45) Hinweis auf die Patenterteilung:
**23.07.2003 Patentblatt 2003/30**

(21) Anmeldenummer: **99920451.4**

(22) Anmeldetag: **14.05.1999**

(51) Int Cl.:
***B23K 9/095*** (2006.01)

(86) Internationale Anmeldenummer:
**PCT/AT1999/000122**

(87) Internationale Veröffentlichungsnummer:
**WO 1999/058286 (18.11.1999 Gazette 1999/46)**

(54) **VERFAHREN ZUM STEUERN EINES SCHWEISSGERÄTES UND STEUERVORRICHTUNG HIERFÜR**

METHOD FOR CONTROLLING A WELDING APPARATUS AND CORRESPONDING CONTROL DEVICE

PROCEDE DE COMMANDE D'UN POSTE DE SOUDURE ET DISPOSITIF DE COMMANDE ASSOCIE

(84) Benannte Vertragsstaaten:
**CH DE DK ES FI FR GB IT LI PT SE**
Benannte Erstreckungsstaaten:
**SI**

(30) Priorität: **13.05.1998 AT 82598**

(43) Veröffentlichungstag der Anmeldung:
**16.05.2001 Patentblatt 2001/20**

(73) Patentinhaber: **Fronius International GmbH**
**4643 Pettenbach (AT)**

(72) Erfinder:
• **WITTMANN, Manfred**
**A-4845 Rutzenmoos (AT)**
• **NIEDEREDER, Franz**
**A-4652 Fischlham (AT)**

• **FRIEDL, Helmut**
**A-4621 Sipbachzell (AT)**

(74) Vertreter: **Secklehner, Günter**
**Rechtsanwalt,**
**Pyhrnstrasse 1**
**8940 Liezen (AT)**

(56) Entgegenhaltungen:
**EP-A- 0 865 858        US-A- 5 571 431**

• **KOIZUMI ET AL.: "Development and site application of an automatic welding system for pipelines," WELDING INTERNATIONAL, Bd. 2, Nr. 11, 1988, Seiten 1012-1017, XP000000564 cambridge ( GB )**

EP 1 098 729 B2

**Beschreibung**

Die Erfindung betrifft ein Verfahren zum Steuern eines Schweißgerätes bzw. einer Stromquelle sowie eine Steuervorrichtung für ein Schweißgerät, wie sie im Oberbegriff der Ansprüche 1 und 7 beschrieben sind (Siehe EP-A-0 865 858, die der vorveröffentlichten WO-A-97 109 19 entspricht.

Es sind bereits Verfahren zum Steuern von Schweißgeräten bzw. Stromquellen sowie eine hierzu benötigte Steuervorrichtung bekannt, bei der über eine Ein- und/oder Ausgabevorrichtung unterschiedliche Schweißparameter, wie beispielsweise ein Schweißstrom, ein Zusatzmaterial, ein Schweißverfahren usw., eingestellt werden kann, wobei aufgrund der eingestellten Schweißparameter eine Steuervorrichtung eine entsprechende Steuerung der einzelnen Komponenten des Schweißgerätes durchführt, sodaß ein Benutzer einen entsprechenden Schweißprozeß durchführen kann.

Der vorliegenden Erfindung liegt die Aufgabe zugrunde, ein Verfahren zum Steuern eines Schweißgerätes bzw. einer Stromquelle und eine Vorrichtung zu schaffen, bei der durch einfaches Eingeben bzw. Ändern von Schweißparametern ein entsprechender Schweißprozeß errechnet und durchgeführt werden kann.

Diese Aufgabe der Erfindung wird durch die Maßnahmen im Kennzeichenteil des Anspruches 1 gelöst. Vorteilhaft ist hierbei, daß durch Speichern einer Minimum- und einer Maximum-Kurve für ein Schweißverfahren nur eine geringe Speicherkapazität benötigt wird und somit eine Vielzahl unterschiedlicher Kurven für unterschiedliche Schweißverfahren in einem Schweißgerät hinterlegt werden können. Ein weiterer Vorteil liegt darin, daß durch die Verschachtelung bzw. Ableitung mehrerer Schweißparameter von einem Schweißparameter durch eine einfache Berechnungsmethode, insbesondere eines Interpolationsberechnungsverfahren, jeder beliebige Wert eines Schweißparameters oder jeder Schweißparameter ermitteln werden kann, wobei jedoch der Benutzer einzelne oder mehrere Schweißparameter vorgeben kann, an die die weiteren Schweißparameter angepaßt werden, sodaß für die Bildung einer entsprechenden Schweißnaht benutzerspezifische Schweißparameter für die Berechnung der Schweißnaht bzw. der einzelnen Schweißparameter herangezogen werden können.

Weitere vorteilhafte Ausbildungen sind in den Ansprüchen 2 bis 6 beschrieben. Die damit erzielbaren Vorteile sind der detaillierten Figurenbeschreibung zu entnehmen.

Die Erfindung umfaßt weiters auch eine Steuervorrichtung für ein Schweißgerät, wie diese im Oberbegriff des Anspruches 7 beschrieben ist.

Diese Steuervorrichtung ist durch die Merkmale im Kennzeichenteil des Anspruches 7 gekennzeichnet. Vorteilhaft ist hierbei, daß eine große Anzahl unterschiedlicher Minimum- und Maximum-Kurven für unterschiedliche Schweißverfahren eingesetzt werden können, wobei nur eine geringe Speicherkapazität benötigt wird. Vorteilhaft ist weiters auch, daß für die unterschiedlichen Einstellungen eines Schweißverfahrens durch ein einfaches Berechnungsverfahren, insbesondere durch ein Interpolationsberechnungsverfahren, die weiteren Schweißparameter errechnet werden können und somit eine dreidimensionale Kennlinie für ein Schweißverfahren geschaffen werden kann.

Von Vorteil ist auch, daß durch Vorgabe von Minimalkurven und Maximalkurven Fehlberechnungen ausgeschlossen werden können, da die Minimalkurve und die Maximalkurve gleichzeitig die Grenzwerte für eine mögliche Schweißeinstellung des Schweißgerätes festlegen und somit bei Über- bzw. Unterschreiten eines Grenzwertes ein Störsignal von der Steuervorrichtung ausgesandt werden kann, sodaß der Benutzer eine Neueinstellung des Schweißgerätes vornehmen kann.

Weitere vorteilhafte Ausbildungen sind in den Ansprüchen 8 bis 11 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispiele näher erläutert.

Es zeigen:

Fig. 1   ein Übersichtsbild eines erfindungsgemäßen Schweißgerätes in vereinfachter, schematischer Darstellung;

Fig. 2   ein Blockschaltbild einer Steuervorrichtung des Schweißgerätes in vereinfachter, schematischer Darstellung;

Fig. 3   eine Oberfläche der Ein- und/oder Ausgabevorrichtung des Schweißgerätes in vereinfachter, schematischer Darstellung;

Fig. 4   eine weitere Ausführungsform der Oberfläche der Ein- und/oder Ausgabevorrichtung des Schweißgerätes in vereinfachter, schematischer Darstellung;

Fig. 5   eine andere Ausbildung der Oberfläche der Ein- und/oder Ausgabevorrichtung des Schweißgerätes in vereinfachter, schematischer Darstellung;

Fig. 6    eine weitere Ausbildung der Oberfläche der Ein- und/oder Ausgabevorrichtung in vereinfachter, schematischer Darstellung;

Fig. 7    ein Schaubild zur Erfassung der Schweißgeschwindigkeit eines Schweißbrenners des Schweißgerätes in vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltene Offenbarung sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale aus den gezeigten unterschiedlichen Ausführungsbeispielen für sich eigenständige erfindungsgemäße Lösungen bilden.

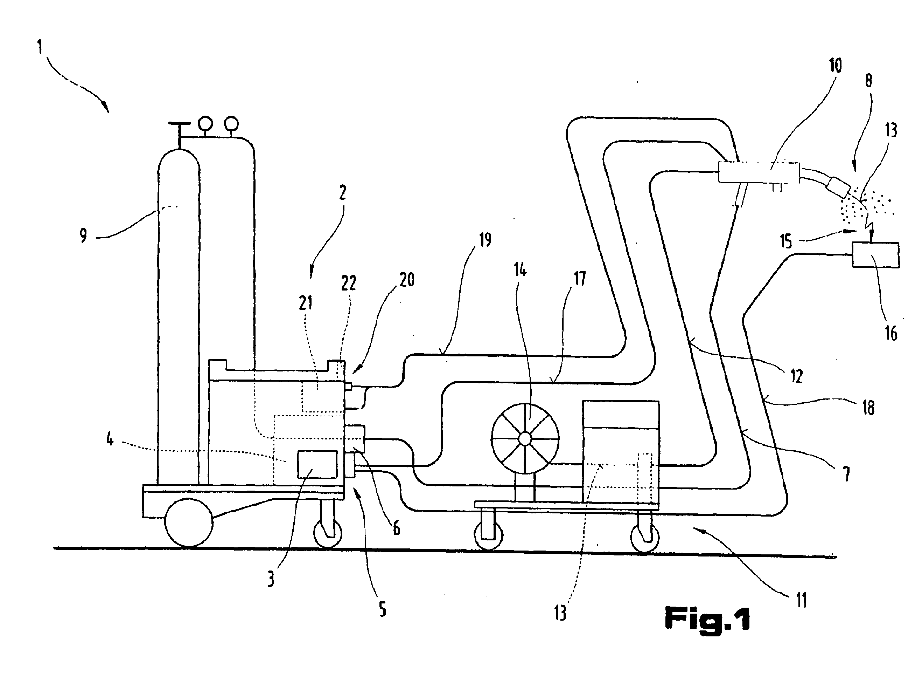

In Fig. 1 ist ein Schweißgerät 1 für verschiedenste Schweißverfahren, wie zum Beispiel MIG/MAG-Schweißen bzw. TIG- oder WIG-Schweißen, gezeigt. Das Schweißgerät 1 umfaßt eine Stromquelle 2 mit einem Leistungsteil 3, eine Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise Stickstoff, Helium oder Argon und dergleichen, zwischen einem Gasspeicher 9 und einem Schweißbrenner 10 angeordnet ist.

Zudem wird über die Steuervorrichtung 4 auch noch ein Drahtvorschubgerät 11 angesteuert, wobei über eine Versorgungsleitung 12 ein Schweißdraht 13 von einer Vorratstrommel 14 in dem Bereich des Schweißbrenners 10 zugeführt wird. Der Strom zum Aufbau eines Lichtbogens 15 zwischen dem Schweißdraht 13 und einem Werkstück 16 wird über eine Versorgungsleitung 17, 18 vom Leistungsteil 3 der Stromquelle 2 dem Schweißbrenner 10 bzw. dem Schweißdraht 13 zugeführt.

Zum Kühlen des Schweißbrenners 10 wird dieser über einen Kühlkreislauf 19 unter Zwischenschaltung eines Strömungswächters 20 mit einem Wasserbehälter 21 verbunden, wodurch bei der Inbetriebnahme des Schweißbrenners 10 der Kühlkreislauf 19 von der Steuervorrichtung 4 gestartet werden kann und somit eine Kühlung des Schweißbrenners 10 bzw. einer Gasdüse des Schweißbrenners 10 bewirkt wird. Selbstverständlich ist es möglich, daß ein externer Kühlkreislauf 19, wie er bereits aus dem Stand der Technik bekannt ist, eingesetzt werden kann.

Weiters weist das Schweißgerät 1 eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet, und von dieser werden anschließend die einzelnen Komponenten des Schweißgerätes 1 entsprechend den vorgegeben Schweißparametern angesteuert. Hierzu ist es ebenfalls möglich, daß das Schweißgerät 1 mit einer externen Ein- und/oder Ausgabevorrichtung 22, wie beispielsweise einem Computer, einer SPS oder einem Bedienelement, usw., verbunden werden kann.

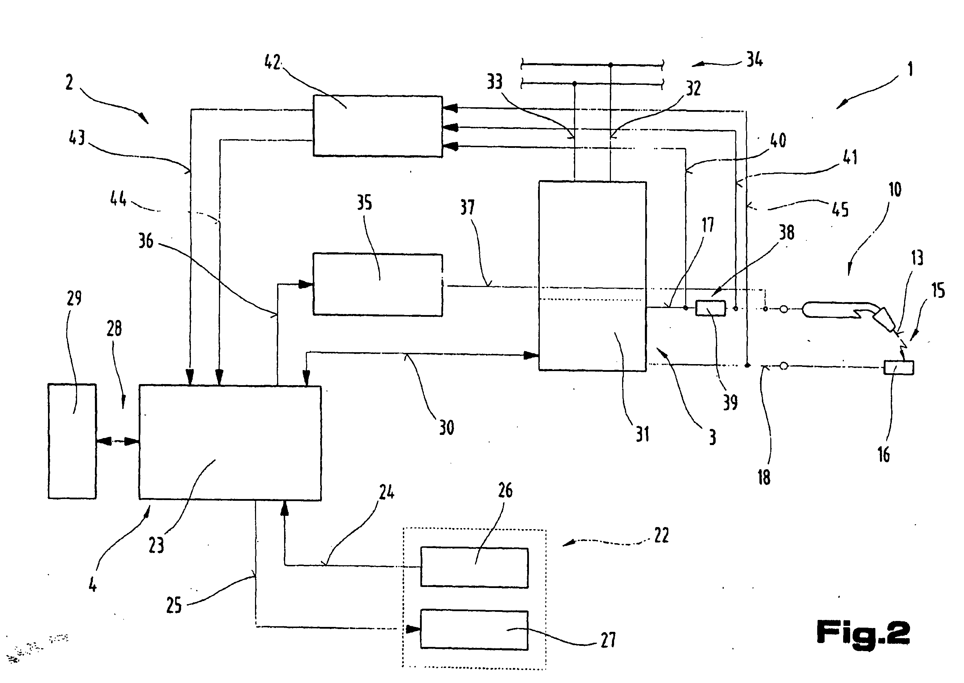

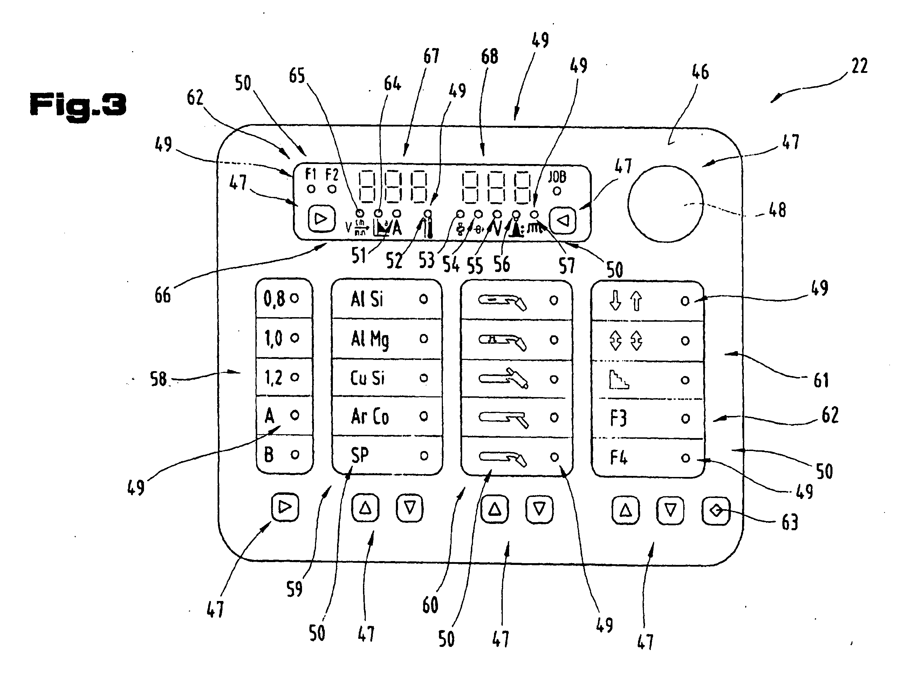

In den Fig. 2 und 3 ist ein Blockschaltbild des Schweißgerätes 1 und eine detaillierte Darstellung der Ein- und/oder Ausgabevorrichtung 22 dargestellt.

Die Steuervorrichtung 4 wird bevorzugt aus einer Mikroprozessorsteuerung 23 oder einer konventionellen analogen oder digitalen Steuerung gebildet. An einem Eingang der Steuervorrichtung 4, insbesondere der Mikroprozessorsteuerung 23, ist über mehrere Leitungen 24, 25 die Ein- und/oder Ausgabevorrichtung 22 angeschlossen, wobei der Übersichtlichkeit halber nur jeweils eine Leitung 24, 25 dargestellt ist. Dabei ist es jedoch möglich, daß die Ein- und/oder Ausgabevorrichtung 22 durch getrennte Elemente, also durch eine Eingabevorrichtung 26 und eine Ausgabevorrichtung 27, gebildet sein kann. Weiters ist es möglich, daß die Eingabevorrichtung 26 durch eine Tastatur oder durch jegliche andere Arten von Eingabemöglichkeiten, zum Beispiel durch Potentiometer, Touchscreen oder Taster, usw., gebildet sein kann. Die Ausgabevorrichtung 27 kann beispielsweise durch eine Displayanzeige, eine LED-Anzeige, eine LCD-Anzeige, eine Digitalanzeige, einen Bildschirm oder einen Touchscreen gebildet werden. Der Datenaustausch zwischen der Ein- und/oder Ausgabevorrichtung 22, insbesondere der Eingabevorrichtung 26 und der Ausgabevorrichtung 27, und der Steuervorrichtung 4 erfolgt über die Leitungen 24, 25. Es ist auch möglich, daß die Steuervorrichtung 4 eine standardisierte Schnittstelle aufweisen kann, sodaß ein Datenaustausch bzw. die Einstellung des Schweißgerätes 1 von einer externen Komponente, wie beispielsweise einem Roboter, durchgeführt werden kann.

An weiteren Ein- und/oder Ausgängen der Mikroprozessorsteuerung 23 bzw. der Steuervorrichtung 4 ist beispielsweise über ein Bussystem 28, welches aus Adressund Datenleitungen besteht, eine Speichervorrichtung 29 angeschlossen, sodaß entsprechende Daten bzw. Steuerprogramme hinterlegt werden können.

Die Steuervorrichtung 4, insbesondere die Mikroprozessorsteuerung 23, ist über zumindest eine Leitung 30 mit dem Leistungsteil 3 verbunden. Damit ein schneller Datenaustausch zwischen dem Leistungsteil 3 und der Steuervorrichtung 4 durchgeführt werden kann, ist es möglich, daß die Leitung 30 durch einen Lichtleiter gebildet sein kann. Selbstverständlich ist es möglich, daß die Verbindung der Steuervorrichtung 4 und dem Leistungsteil 3 aus mehreren elektrischen Leitungen 30 oder Lichtleitern aufgebaut werden kann. Das Leistungsteil 3 kann beispielsweise durch eine primär getaktete Inverterstromquelle 31 oder aus jeder anderen zum Stand der Technik zählenden Stromquelle 2 gebildet werden. Damit das Leistungsteil 3 mit Energie, insbesondere mit Strom und Spannung, versorgt werden kann, ist dieses über Versorgungsleitungen 32, 33 mit einem Spannungsversorgungsnetz 34 verbunden. Selbstverständlich ist es möglich, daß anstelle des Spannungsversorgungsnetzes 34 jede andere Art von Energiequelle, wie beispielsweise eine Batterie, zur Speisung des Leistungsteils 3 verwendet werden kann.

Das Leistungsteil 3, insbesondere die Inverterstromquelle 31, hat die Aufgabe, die von dem öffentlichen Spannungsversorgungsnetz 34 gelieferte Energie in eine entsprechende Schweißenergie umzuwandeln, wie dies bereits aus dem Stand der Technik bekannt ist und daher auf die Funktion der Umwandlung der zugeführten Energie nicht näher eingegangen wird.

Damit ein Schweißprozeß über das Schweißgerät 1 durchgeführt werden kann, ist das Leistungsteil 3, insbesondere die Inverterstromquelle 31, über die Versorgungsleitungen 17, 18 mit dem Schweißbrenner 10 und dem Werkstück 16 verbunden.

Damit der Lichtbogen 15 zwischen dem Schweißdraht 13 und dem Werkstück 16 gezündet werden kann, ist es beispielsweise möglich, daß das Schweißgerät 1 einen Hochfrequenzgenerator 35 aufweist. Der Hochfrequenzgenerator 35 ist über Leitungen 36, 37 mit der Steuervorrichtung 4 und dem Ausgang des Leistungsteils 3, insbesondere mit der Versorgungsleitung 17 verbunden. Selbstverständlich ist es möglich, daß zum Zünden des Lichtbogens 15 jedes andere zum Stand der Technik zählende Verfahren, wie z.B. das Kontaktzünden, eingesetzt werden kann. Für die Zündung des Lichtbogens 15 wird von der Steuervorrichtung 4 ein Steuersignal an den Hochfrequenzgenerator 35 übergeben, wodurch anschließend ein Hochfrequenzsignal auf die Schweißenergie aufmoduliert wird, sodaß durch das Zuführen des Schweißdrahtes 13 zum Werkstück 16 bei einem bestimmten Abstand des Schweißdrahtes 13 zum Werkstück 16 eine einfache und automatische Zündung des Lichtbogens 15 erfolgt.

Damit der Schweißprozeß von der Steuervorrichtung 4 überwacht bzw. gesteuert werden kann, ist in der Versorgungsleitung 17 zum Schweißbrenner 10 oder in der Verbindungsleitung 18 zum Werkstück 16 eine Meßvorrichtung 38 angeordnet. Die Meßvorrichtung 38 kann dabei durch einen zum Stand der Technik zählenden Shunt 39 gebildet werden, sodaß der Stromfluß über die Versorgungsleitung 17 von der Meßvorrichtung 38 erfaßt werden kann. Dazu sind beidseits der Meßvorrichtung 38 Leitungen 40, 41 mit der Versorgungsleitung 17 verbunden, die anschließend mit einer Wandlervorrichtung 42 oder direkt mit der Steuervorrichtung 4 verbunden sind. Die Wandlervorrichtung 42 hat die Aufgabe, die von der Meßvorrichtung 38 gemessenen Werte, insbesondere den Strom und die Spannung, in ein digitales Signal umzuwandeln und anschließend über Leitungen 43, 44 an die Steuervorrichtung 4 bzw. an die Mikroprozessorsteuerung 23 weiterzuleiten, sodaß entsprechend den ermittelten Daten ein Steuervorgang von der Steuervorrichtung 4 durchgeführt werden kann. Damit auch die Spannung am Schweißbrenner 10 bzw. zwischen dem Schweißdraht 13 und dem Werkstück 16 ermittelt werden kann, ist eine weitere Leitung 45 zwischen der Wandlervorrichtung 42 und der Versorgungsleitung 18 angeordnet.

In Fig. 3 ist eine Oberfläche, insbesondere eine Frontplatte 46, der Ein- und/oder Ausgabevorrichtung 22 gezeigt. Die Ein- und/oder Ausgabevorrichtung 22 ist, wie bereits in Fig. 2 beschrieben, über diverse Leitungen 24, 25 mit der Steuervorrichtung 4 verbunden, sodaß über die Ein- und/oder Ausgabevorrichtung 22 die einzelnen Schweißparameter bzw. unterschiedliche Schweißprozesse eingestellt bzw. angezeigt werden können.

An der Frontplatte 46 ist es für den Benutzer möglich, über einzelne Einstellorgane 47 die unterschiedlichsten Schweißparameter bzw. Schweißprozesse auszuwählen, wobei diese über einen Hauptregler 48 vom Benutzer verändert werden können. Damit der Benutzer die ausgewählten Schweißparameter erkennen kann, weist die Ein- und/oder Ausgabevorrichtung 22, insbesondere die Frontplatte 46, einzelne Anzeigeorgane 49 auf. Zusätzlich sind für die einzelnen Schweißparameter bzw. die unterschiedlichen Schweißprozesse Symbole 50 auf der Frontplatte 46 dargestellt.

Die Einstellorgane 47 können durch einzelne Taster bzw. durch einen Inkrementalgeber für den Hauptregler 48 gebildet werden. Hierzu ist es beispielsweise möglich, daß entsprechend dem dargestellten Ausführungsbeispiel die Einstellorgane 47 durch Folientaster bzw. durch ein Potentiometer für den Hauptregler 48 ausgebildet sein kann. Selbstverständlich ist es möglich, daß jedes beliebige aus dem Stand der Technik bekannte Einstellorgan 47 angewendet werden kann.

Die Anzeigeorgane 49 werden beispielsweise durch LED's oder LCD-Anzeigen gebildet. Selbstverständlich ist es wiederum möglich, daß jede beliebige andere Ausbildung von Anzeigeorganen 49 zum Anzeigen der Schweißparameter bzw. der hinterlegten Werte verwendet wird. Es ist auch möglich, daß anstelle von den einzelnen Einstellorganen 47 und den Anzeigeorganen 49 ein Touchscreen eingesetzt wird, sodaß durch Berühren des Bildschirms die entsprechenden Schweißparameter ausgewählt und angezeigt werden können.

Ein Benutzer hat nunmehr die Möglichkeit, daß er über die Einstellorgane 47 an der Frontplatte 46 die unterschiedlichsten Schweißparameter, wie beispielsweise einen Schweißstrom 51, eine Übertemperatur 52, eine Materialstärke 53 für das Werkstück 16, eine Drahtvorschubgeschwindigkeit 54, eine Schweißspannung 55, eine Lichtbogenlänge 56 und einen Stromanstieg 57 auswählen, anzeigen oder einstellen kann. Zusätzlich ist es möglich, daß der Benutzer weitere Schweißparameter, wie den Drahtdurchmesser 58, die Gasmischung 59 sowie unterschiedliche Schweißprozesse 60 und Zusatzfunktionen 61 einstellen kann. Es ist auch möglich, daß das Schweißgerät 1 über eine übergeordnete Steuervorrichtung, wie beispielsweise einem Computer, einer SPS, einem externen Bedienelement, usw., eingestellt bzw. die Einstellung angezeigt werden kann. Hierzu wird die übergeordnete Steuerung über eine standardisierte Schnittstelle mit dem Schweißgerät 1 verbunden, sodaß ein direkter Datentransfer durchgeführt werden kann.

Auf den Funktionsablauf für die Auswahl und Anzeige der einzelnen Schweißparameter durch die Einstellorgane 47 und Anzeigeorgane 49 wird nicht näher eingegangen, da jedes beliebige aus dem Stand der Technik bekannte Verfahren zum Einstellen, Auswählen oder Anzeigen von Parametern, insbesondere von Schweißparametern, eingesetzt werden kann. Es wird nur kurz darauf hingewiesen, daß zu den einzelnen Schweißparametern in der Speichervorrichtung 29 Standardwerte bzw. Soll-Werte hinterlegt sind, sodaß bei Auswahl eines entsprechenden Schweißparameters dieser Standardwert bzw. Soll-Wert aus der Speichervorrichtung 29 geladen wird und anschließend durch Ansteuern der Ein- und/oder Ausgabevorrichtung 22 von der Steuervorrichtung 4 diese über die Anzeigeorgane 49 an der Frontplatte 46 angezeigt werden. Der Benutzer hat anschließend die Möglichkeit, über den Hauptregler 48 den angezeigten Standardwert bzw. Soll-Wert zu verändern, sodaß entsprechend den Einstellungen des Benutzers ein Schweißprozeß von der Steuervorrichtung 4 errechnet wird und vom Benutzer durchgeführt werden kann.

Weiters ist es möglich, daß an der Frontplatte 46 ein Anzeigeorgan 49 in Form eines Speicherelementes 62, welches durch das Symbol 50 "F1-F4" dargestellt ist, angeordnet sein kann. Das Anzeigeorgan 49 für das Speicherelement 62 ist beispielsweise in Form einer Leuchtdiode ausgebildet, sodaß bei Auswahl dieses Symbols 50 das Anzeigeorgan 49 zu leuchten beginnt und somit der Benutzer erkennen kann, daß diese Funktion ausgewählt wurde. Der Benutzer hat durch die Verwendung eines derartigen Speicherelementes 62 die Möglichkeit, daß er zusätzliche Schweißparameter, die nicht an der Frontplatte 46 angeführt sind, einem dieser Speicherelemente 62 zuordnen kann, sodaß er bei einer neuerlichen Inbetriebnahme des Schweißgerätes 1 ohne großen Aufwand, nur durch Auswahl des entsprechenden Speicherelementes 62, wiederum diesen Schweißparameter zur Verfügung hat. Die Speicherung der zugeordneten Daten bzw. der Zuordnung des Schweißparameters erfolgt in der Speichervorrichtung 29. Hierzu ist eine Speichertaste 63 an der Frontplatte 46 angeordnet.

Der Benutzer hat weiters die Möglichkeit, daß sämtliche nicht an der Frontplatte 46 dargestellte Schweißparameter durch entsprechende Betätigung der Einstellorgane 47 bei Auswahl eines Speicherelementes 62 ausgewählt werden können, sodaß auch jene Schweißparameter verändert werden können, die nicht an der Frontplatte 46 dargestellt sind. Es ist auch möglich, daß der Benutzer einzelne Prozeßschritte bzw. Verfahrensabläufe den Speicherelementen 62 zuordnen kann, d.h. daß der Benutzer einen Prozeßablauf bzw. Verfahrensablauf, wie beispielsweise das Einfädeln des Schweißdrahtes 13, einem Speicherelement 62 zuordnen kann, sodaß der Benutzer jederzeit die Möglichkeit hat, diesen Prozeßablauf bzw. Verfahrensablauf über dieses Speicherelement 62 zu aktivieren.

Erfindungsgemäß ist nunmehr vorgesehen, daß ein zusätzlicher Schweißparameter in das Schweißgerät 1, insbesondere in die Ein- und/oder Ausgabevorrichtung 22 bzw. in die Steuervorrichtung 4, mitaufgenommen wird. Bei dem zusätzlichen Schweißparameter handelt es sich um die Angabe bzw. die Einstellmöglichkeit einer Schweißnaht, insbesondere um die Flächenangabe bzw. Querschnittsangabe einer Schweißnaht, nämlich um das a-Maß 64, und einer Schweißgeschwindigkeit 65, welche durch ein Anzeigeorgan 66 in Form einer Leuchtdiode und als Symbol 50 an der Frontplatte 46 dargestellt sind. Der Benutzer hat damit die Möglichkeit, eine Einstellung der Fläche bzw. des Querschnittes für ein Schweißverfahren bzw. einen Schweißprozeß zur Bildung aller einlagigen oder mehrlagigen Schweißnahtformen vorzunehmen.

Der Schweißparameter bzw. die Schweißangabe des a-Maßes 64 ist bereits aus dem Stand der Technik bekannt, wobei dieses jedoch noch nicht in einem Schweißprozeß eingebunden wird, sondern der Benutzer derzeit nur aus den Schweißplänen bzw. Schweißzeichnungen diesen Schweißparameter entnehmen bzw. berechnen kann und anschließend nach seinen Erfahrungswerten die Einstellung des Schweißgerätes 1 zur Bildung einer entsprechenden Schweißnaht vornimmt.

Das a-Maß 64 dient hauptsächlich für Maßangaben, insbesondere für den Schweißnahtquerschnitt, von Schweißnähten, insbesondere von Kehlnähten, die den überwiegenden Teil von Schweißungen bzw. Schweißprozessen ausmachen. Die Bemaßung von Schweißnähten kann mit mehreren verschiedenen Parametern bzw. Angaben oder Maßen erfolgen. Die Nahtdicke, die Nahtbreite oder die Schenkellänge von Schweißnähten, insbesondere von Kehlnähten, geben dem Benutzer Auskunft. In der schweißtechnischen Zeichnung ist das "Nahtdickenmaß a", das "Nahtbreitenmaß b" oder das "Schenkelmaß z" angegeben. Das Einstellen von abgeleiteten Längen-, Flächen-, oder Volumenangaben erfolgt durch das a-Maß 64, das z-Maß oder das b-Maß. Dies kann für die Bildung einer Fläche einer Schweißnaht für ein Schweißverfahren bzw. für einen Schweißprozeß bei allen einlagigen oder mehrlagigen Schweißnahtformen eingesetzt werden. Damit der Benutzer auf die unterschiedlichen Parameter zugreifen kann, kann der Benutzer am Schweißgerät 1 den Schweißparameter des a-Maßes 64 auswählen, sodaß anschließend durch Betätigung eines Einstellorgans 47 ein taktweises bzw. schrittweises Weiterschalten auf die unterschiedlichen Parameter, nämlich das a-Maß, das b-Maß und das z-Maß, für die Bemaßung der Schweißnaht durchgeführt werden kann. Zur Berechnung einzelner unbekannter Komponenten bzw. unbekannter Angaben können die aus dem Stand der Technik bekannten Formeln

$$z = a \cdot \sqrt{2}$$

$$b = \sqrt{2} \cdot z^2$$

die in der Speichervorrichtung 29 hinterlegt sind und von der Steuervorrichtung 4 zur Berechnung herangezogen werden, verwendet werden.

Aus dem Stand der Technik ist derzeit bekannt, daß die Einstellung des Schweißgerätes 1 vom Benutzer selbst durchgeführt wird, sodaß für die Bildung einer Kehlnaht, wie sie beispielsweise aus einer schweißtechnischen Zeichnung zu entnehmen ist, vom Benutzer viel Erfahrung bzw. unzählige Schulungen zur Erreichung einer richtigen Einstellung des Schweißgerätes 1 benötigt werden. Der Benutzer hat jedoch aufgrund der vorgegebenen Parameter bzw. Maßangaben nunmehr die Möglichkeit, durch Eingabe der vorgegebenen Parameter über das Schweißgerät 1 eine selbständige Berechnung sowie Einstellung der einzelnen Schweißparameter durchführen zu lassen, da sämtliche für die Berechnung einer Schweißnaht benötigten Formeln in der Speichervorrichtung 29 oder Steuervorrichtung 4 hinterlegt sind.

Dazu ist es möglich, daß die nachstehend angeführte Gleichung zur Berechnung der einzelnen Schweißparameter verwendet werden kann, wobei für die einzelnen Schweißparameter folgende Abkürzungen eingesetzt werden: Schweißnahtquerschnitt "A" in mm², Schweißgeschwindigkeit "$v_{sch}$" in cm/min, Querschnitt des Zusatzmaterials "Az" in mm², Drahtvorschub "$v_{draht}$" m/min.

Die Gleichung lautet daher:

$$A \cdot v_{sch} = Az \cdot v_{draht}$$

Daraus kann nunmehr die Steuervorrichtung 4 durch Umwandlung und Ableitung der Gleichung die Schweißgeschwindigkeit 65 und die Fläche der Schweißnaht bzw. den Schweißnahtquerschnitt, insbesondere das a-Maß 64, ermitteln:

Schweißnahtquerschnitt:

$$A = a^2$$

Querschnitt des Zusatzmaterials:

$$Az = (d^2 \cdot \pi) / 4$$

a-Maß 64:

$$a = \sqrt{\frac{\left(d^2 \cdot \pi \cdot v_{draht} \cdot 100\right)}{\left(4 \cdot v_{sch}\right)}}$$

Schweißgeschwindigkeit 65:

$$v_{sch} = ( d^2 * \pi \times v_{draht} * 100 ) / ( 4 * a^2 )$$

Weiters ist der Winkel "w" der beiden zu verschweißenden Werkstücke 16 zueinander ausschlaggebend, um die benötigten bzw. vorgegebenen Abmessungen der Schweißnaht zu erreichen. Ist dem Benutzer der Winkel der beiden zu verschweißenden Werkstücke 16 bekannt, so kann er durch die aus dem Stand der Technik bekannte Formel

$$A=\tan ( w / 2 ) * a^2$$

die Fläche der Schweißnaht in bezug auf das a-Maß 64, mit dem Kürzel "a", berechnen.

Selbstverständlich ist es möglich, daß auch für die weiteren Schweißparamter Maßbezeichnungen von Schweißnähten, wie dem Nahtbreitenmaß b und dem Schenkelmaß z, eine Berechnung aus den zum Stand der Technik zählenden Formeln erfolgen kann. Hierzu ist es beispielsweise möglich, daß zur Berechnung oder ausgehend von der Schenkellänge, also des z-Maßes mit dem Kürzel "z", die nachstehende Formel verwendet werden kann.

$$A = [\sin ( w \text{ der Werkstücke } * z^2 )] / 2$$

Wird beispielsweise von einem Benutzer ein MIG/MAG-Schweißprozeß zur Bildung einer Schweißnaht, insbesondere einer Kehlnaht, ausgewählt bzw. durchgeführt, so wird bei den aus dem Stand der Technik bekannten Schweißgeräten 1 die Geräteeinstellung aufgrund von Erfahrungswerten des Schweißers bzw. des Benutzers vorgenommen, d. h., daß der Schweißer bzw. der Benutzer den Drahtvorschub, die Schweißspannung und den Schweißstrom aus Erfahrungswerten zum Erreichen der errechneten bzw. ermittelten Fläche der Schweißnaht am Schweißgerät 1 einstellt und anschließend entsprechend seiner Erfahrung den Schweißprozeß mit einer entsprechenden Schweißgeschwindigkeit durchführt. Bei einer derartigen Einstellung des Schweißgerätes 1 und bei einer Durchführung des Schweißprozesses mit einer selbst eingeschätzten Schweißgeschwindigkeit ist nicht sichergestellt, daß der Schweißer bzw. der Benutzer auch eine entsprechend der berechneten Fläche bzw. Querschnittes ausgebildete Schweißnaht erreicht, wodurch fehlerhafte Schweißnähte entstehen können. Durch derartig fehlerhafte Schweißnähte kann es nämlich passieren, daß bei entsprechenden Konstruktionen die Schweißnähte den Belastungen nicht standhalten, sodaß es zum Bruch der beiden verschweißten Teile kommen kann.

Modernere Schweißstromquellen bieten dem Schweißer bzw. dem Benutzer durch vorprogrammierte Schweißkennlinien, die in der Speichervorrichtung 29 hinterlegt sind, bereits vor der Schweißung Richtwerte an. Hierzu kann der Schweißer bzw. der Benutzer durch Auswahl dieser Schweißkennlinien die einzelnen Schweißparameter, wie den Schweißstrom, die Schweißspannung, die Materialdickenrichtwerte, den Drahtvorschubsollwert, ablesen bzw. verändern und übernehmen, sodaß ein entsprechender Schweißprozeß, laut den hinterlegten Schweißkennlinien, durchgeführt werden kann. Die spezielle Einstellung bzw. die Anpassung der vorgegebenen Schweißparameter wurde dadurch für den Benutzer erleichtert, wobei jedoch die Angaben über die zu erwartenden Nahtdicken bzw. die Fläche oder der Querschnitt der Schweißnaht aus dem Schweißplan bzw. der Schweißanweisung zu entnehmen oder die Schweißgeschwindigkeit der Erfahrung des Schweißers bzw. des Benutzers überlassen waren.

Damit ein Schweißer bzw. ein Benutzer eine annähernd vorgegebene Schweißnaht, insbesondere eine Kehlnaht, erstellen konnte, mußte dieser vor der tatsächlichen Schweißung einige Probeschweißungen zur Findung der richtigen Geräteeinstellung bzw. der Schweißgeschwindigkeit durchführen, was einen hohen Zeit- und Materialaufwand bewirkte. Es bestand dabei jedoch immer noch die Gefahr, daß Fehlschweißungen in Form von Kaltstellen oder infolge zu großer Wärmeeinbringung durch die falsche Wahl eines Schweißparameters entstehen konnten.

Der Schweißer bzw. der Benutzer hat nunmehr die Möglichkeit die unterschiedlichen Parameter, z.B. das a-Maß 64, über die Ein- und/oder Ausgabevorrichtung 22 einzustellen, worauf die Steuervorrichtung 4 durch die bereits aus dem Stand der Technik bekannten Formeln die unterschiedlich fehlenden Komponenten bzw. Schweißparameter berechnet und an der Ein- und/oder Ausgabevorrichtung 22 dem Schweißer bzw. dem Benutzer anzeigt. Hierzu kann der Benutzer die beiden Anzeigeorgane 66 bzw. die Schweißparameter des a-Maßes 64 und der Schweißgeschwindigkeit 65 aktivieren, wodurch eine Eingabe für die Berechnung durch die bekannten Formeln durchgeführt werden kann. Die Berechnungsgrundlage kann von unterschiedlichen Schweißparametern, wie beispielsweise dem Nahtdickenmaß a, dem Nahtbreitenmaß b, dem Schenkelmaß z ausgehen, d. h., daß durch Auswahl des Anzeigeorganes 66, insbesondere des a-Maßes 64, der Schweißer zumindest einen Parameter bzw. Wert zu einem der unterschiedlichen Schweißparameter eingeben kann, worauf die Steuervorrichtung 4 die Berechnung des Schweißprozesses vornimmt. Hierzu ist es möglich, daß bei einer fehlenden Angabe bzw. einem fehlenden Parameter durch Umwandlung der Formeln die Steuervorrichtung 4 die fehlenden Angaben bzw. Parameter errechnet, sodaß der Schweißer anschließend diesen Wert durch Aktivieren des Schweißparameters des a-Maßes 64 ablesen kann.

Damit ein entsprechender Schweißprozeß mit der Einstellung des a-Maßes 64 vom Schweißer bzw. Benutzer durchgeführt werden kann, ist es möglich, daß in der Speichervorrichtung 29 entsprechende Soll-Werte hinterlegt sind, d.h., daß für die unterschiedlichen Parameter einer Schweißnahtfläche bzw. eines Schweißnahtquerschnittes für eine Schweißnaht, insbesondere für eine Kehlnaht, unterschiedliche Soll-Werte hinterlegt sind, sodaß der Benutzer durch Auswahl eines entsprechenden Parameters, insbesondere der Fläche des a-Maßes 64, diese Soll-Werte von der Speichervorrichtung 29 in den Hauptspeicher der Steuervorrichtung 4 geladen und über die Einund/oder Ausgabevorrichtung 22 angezeigt werden. Der Benutzer hat anschließend die Möglichkeit, über den Hauptregler 48 die entsprechenden Soll-Werte des a-Maßes 64 zu verändern. Führt ein Benutzer eine Veränderung eines Soll-Wertes durch, so wird von der Steuervorrichtung 4 eine neue Berechnung des a-Maßes 64, insbesondere der einzelnen Parameter, wie beispielsweise der Schweißstrom, der Drahtvorschub, die Schweißgeschwindigkeit 65, für eine Schweißnaht durchgeführt, worauf anschließend die einzelnen Werte taktweise an der Ein- und/oder Ausgabevorrichtung 22 angezeigt werden.

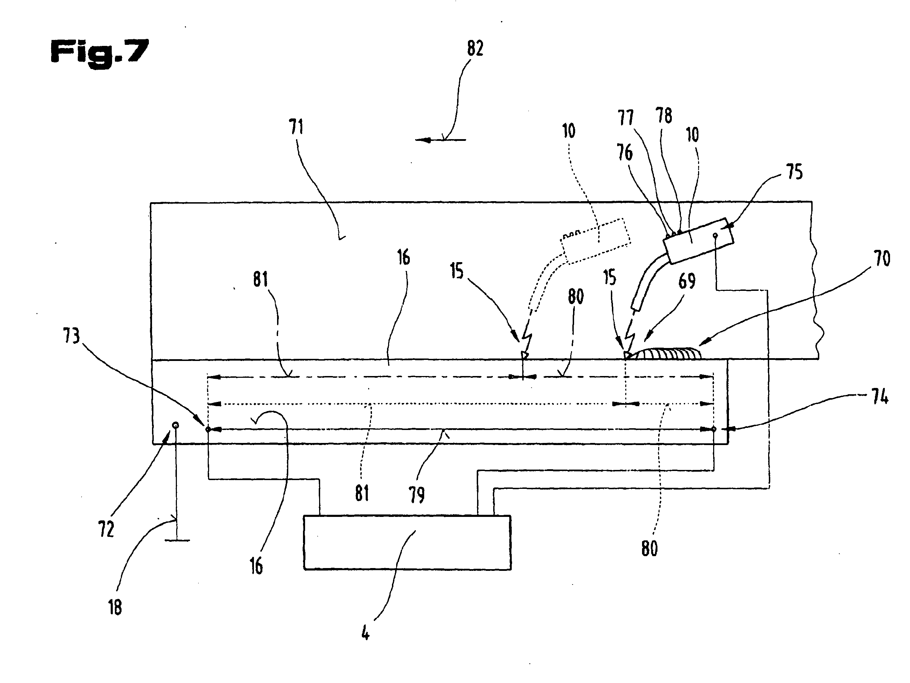

Da für einen Schweißprozeß, insbesondere mit der Einstellung des a-Maßes 64, der Schweißparamter für die Schweißgeschwindigkeit 65 maßgebend ist, ist es beispielsweise möglich, daß der Schweißparameter der Schweißgeschwindigkeit 65 an der Einund/oder Ausgabevorrichtung 22 oder einer übergeordneten Steuervorrichtung, wie beispielsweise einem Computer, einer SPS, usw., angezeigt und verändert werden kann, wobei eine Überwachung der Schweißgeschwindigkeit 65 für den Schweißbrenner 10 von der Steuervorrichtung 4 oder einer Geschwindigkeitsüberwachungsvorrichtung durchgeführt wird, d.h., daß bei einem Schweißprozeß die Schweißgeschwindigkeit 65 von dem Schweißgerät 1, insbesondere von der Steuervorrichtung 4, erfaßt wird, sodaß anschließend über entsprechende Anzeigemittel der Benutzer darauf aufmerksam gemacht wird, daß eine zu hohe oder zu niedrige Schweißgeschwindigkeit vorliegt, wodurch eine Anpassung der Schweißgeschwindigkeit 65 erfolgen kann und somit eine vorgegebene Schweißnaht, insbesondere eine Kehlnaht, vom Benutzer erstellt werden kann. Eine derartige Ausbildung für die Überwachung der Schweißgeschwindigkeit 65 des Schweißbrenners 10 wird anschließend in Fig. 7 näher erläutert.

Selbstverständlich ist es möglich, daß bei Verwendung des Schweißgerätes 1, insbesondere des Schweißbrenners 10, für einen Schweißroboter die Einstellung der Schweißgeschwindigkeit 65 direkt über eine Schnittstelle vom Schweißgerät 1, insbesondere von der Steuervorrichtung 4, an dem Schweißroboter vorgenommen werden kann und somit auch während eines Schweißprozesses ein Datenaustausch über die Schnittstelle zur Anpassung der Schweißgeschwindigkeit 65 zwischen dem Schweißroboter und der Steuervorrichtung 4 durchgeführt werden kann. Hierzu ist es möglich, daß bei zu hoher Schweißgeschwindigkeit 65 bzw. zu niedriger Schweißgeschwindigkeit 65 von der Steuervorrichtung 4 ein Signal bzw. ein entsprechender Datensatz an den Schweißroboter über die Schnittstelle abgesandt wird, wodurch der Schweißroboter entsprechend den Vorgaben des Schweißgerätes 1 die Schweißgeschwindigkeit 65 erhöht bzw. erniedrigt. Selbstverständlich ist es möglich, daß die Schweißgeschwindigkeit 65 vom Schweißroboter über die Schnittstelle dem Schweißgerät 1 bzw. der Steuervorrichtung 4 vorgegeben werden kann, sodaß bei Änderung der Schweißgeschwindigkeit 65 die Steuervorrichtung 4 eine Anpassung der restlichen Schweißparameter, wie beispielsweise des Drahtvorschubes usw., an die neue Schweißgeschwindigkeit 65 durchführt. Der Benutzer hat dabei die Möglichkeit, daß er über eine Sonderfunktion in Form eines Schweißparameters eine entsprechende Einstellung am Schweißgerät 1 bzw. an der Ein- und/oder Ausgabevorrichtung 22 für den Datenaustausch mit einer externen Komponente vornehmen kann. Dabei kann der Benutzer festlegen, ob von der externen Komponente oder von der Steuervorrichtung 4 einzelne Parameter, z.B. die Schweißgeschwindigkeit 65, vorgegeben wird, wodurch beispielsweise ein direkter Datenaustausch zwischen dem Schweißroboter und der Steuervorrichtung 4 vorgenommen werden kann.

Hierzu ist es beispielsweise möglich, daß der Benutzer bei Auswahl des Schweißparameters der Schweißgeschwindigkeit 65 durch Betätigung eines Einstellorganes 47 auf diese Sonderfunktion bzw. diesen Schweißparameter zugreifen kann und damit eine entsprechende Einstellung für einen Datenaustausch bzw. Datentransfer mit einem externen Gerät bzw. einer Anlage, wie einen Schweißroboter, vornehmen kann. Dabei kann der Benutzer noch weitere für den Datentransfer notwendige Einstellungen bzw. Parameter, wie der Baudrate usw., vornehmen.

Hat der Benutzer diese Sonderfunktion ausgewählt, so ist es möglich, daß von der Steuervorrichtung 4 zuerst eine weitere Sonderfunktion, die an der Ein- und/oder Ausgabevorrichtung 22 angezeigt wird, aufgerufen wird, über die der Benutzer einstellen kann, ob ein Schweißprozeß mit einem Handschweißbrenner oder einem Roboterschweißbrenner durchgeführt wird. Dies ist insofern von Vorteil, da in der Speichervorrichtung 29 für die beiden unterschiedlichen Schweißarten verschiedene Soll-Werte hinterlegt sind und somit die Steuervorrichtung 4 die für die gewählte Schweißart entsprechenden Soll-Werte in den Hauptspeicher laden kann bzw. auf die entsprechenden Soll-Werte zugreifen kann.

Durch die Unterscheidung der Schweißarten bezüglich einer manuellen, halbautomatisierten oder automatisierten Schweißung, wie beispielsweise einer Handschweißung oder einer Roboterschweißung, wird erreicht, daß für die Berechnung der einzelnen Schweißparameter und für die Überwachung der Schweißparameter die Steuervorrichtung 4 unterschiedliche Aufgaben durchführen bzw. ausführen muß, d.h., daß beispielsweise bei einer Roboterschweißung eine exaktere Vorgabe bzw. Regelung der Schweißgeschwindigkeit 65 möglich ist, wobei bei einer Handschweißung meist nur Richtwerte in bezug auf die Schweißgeschwindigkeit 65 vorgegeben werden, da der Benutzer bzw. der Schweißer meist nicht in der Lage ist, die vorgegebene Schweißgeschwindigkeit 65 exakt beizubehalten und somit von der Steuervorrichtung 4 eine ständige Anpassung der weiteren Schweißparameter durchgeführt wird. Ein weiterer Unterschied der beiden Schweißarten liegt darin, daß bei einer Roboterschweißung die Schweißgeschwindigkeit 65 wesentlich erhöht werden kann und somit andere Grenzwerte zur Durchführung eines Schweißprozesses festgelegt werden können.

Durch die Unterscheidung der beiden Schweißarten kann die Steuervorrichtung 4 für die Berechnung des Schweißprozesses bei Auswahl einer Handschweißung benutzerspezifische Daten bzw. gespeicherte Einstellungen heranziehen. Dabei ist es beispielsweise möglich, daß der Benutzer bei einer Probeschweißung seine angewohnte Schweißgeschwindigkeit 65 ermittelt und diese durch Eingabe über die Ein- und/oder Ausgabevorrichtung 22 in der Speichervorrichtung 29 speichert, sodaß die Steuervorrichtung 4 bei der Berechnung die restlichen Schweißparameter an diese Schweißgeschwindigkeiten 65 anpaßt, wodurch der Benutzer seine angewohnten Eigenschaften nicht verändern muß. Durch ein derartiges Vorgehen wird annähernd sichergestellt, daß der Benutzer eine entsprechend vorgegebene Schweißnaht herstellen kann.

Für eine Überwachung der Schweißgeschwindigkeit 65 des Schweißbrenners 10 bei der Verwendung für einen Schweißroboter oder einer Handschweißung ist es selbstverständlich möglich, daß jedes beliebige aus dem Stand der Technik bekannte Verfahren zur Überwachung der Schweißgeschwindigkeit 65 eines Schweißbrenners 10 eingesetzt werden kann. Diese Verfahren oder Vorrichtungen bzw. Anlagen müssen nicht im Schweißgerät 1 integriert sein, wobei es möglich ist, daß die Vorrichtungen bzw.

Anlagen über eine Schnittstelle mit dem Schweißgerät 1, insbesondere mit der Steuervorrichtung 4, verbunden sind. Selbstverständlich ist es möglich, daß diese Anlagen bzw. Vorrichtung für die Verfahren zum Messen der Schweißgeschwindigkeit 65 des Schweißbrenners 10 in dem Schweißgerät 1 integriert sein können bzw. bei einer entsprechenden Softwaresteuerung diese über die Steuervorrichtung 4 durchgeführt wird.

Der Benutzer hat nun die Möglichkeit, daß bei vorgegebener Nahtdicke oder Schenkellänge, wie sie aus den Schweißplänen oder aus einer Schweißanweisung zu entnehmen sind, die einzelnen für die Berechnung des a-Maßes 64 benötigten Parameter an der Ein- und/oder Ausgabevorrichtung 22 einstellen kann. Hierzu wählt der Benutzer bzw. der Schweißer das Anzeigeorgan 66 für das a-Maß 64 aus, sodaß anschließend der Benutzer zumindest einen der Parameter, wie das Nahtdickenmaß a, das Nahtbreitenmaß b und das Schenkelmaß z, eingeben kann.

Hierzu werden entsprechende in der Speichervorrichtung 29 hinterlegte Soll-Werte von der Steuervorrichtung 4 ausgelesen und anschließend an der Ein- und/oder Ausgabevorrichtung 22 angezeigt, die jedoch über den Hauptregler 48 vom Benutzer verändert werden kann. Damit ein taktweises Weiterspringen auf den nächsten Parameter durchgeführt werden kann, kann der Benutzer durch Betätigen eines Einstellorganes 47 eine Weiterschaltung auf den nächsten Parameter vornehmen. Zusätzlich werden für die Berechnung des a-Maßes 64 die weiteren Einstellungen, wie beispielsweise das Zusatzmaterial, der Drahttyp, der Durchmesser des Zusatzmaterials, das eingesetzte Gas, usw., zur Berechnung von der Steuervorrichtung 4 herangezogen.

Nachdem der Benutzer sämtliche Schweißparameter am Schweißgerät 1, insbesondere an der Ein- und/oder Ausgabevorrichtung 22, eingestellt hat, erfolgt von der Steuervorrichtung 4 die Berechnung der einzelnen vom Benutzer nicht eingegebenen oder unbekannten Parameter, worauf der Benutzer anschließend durch taktweises Anzeigen der einzelnen Parameter an der Ein- und/oder Ausgabevorrichtung 22 die berechneten Werte ablesen kann.

Falls es notwendig ist, kann der Benutzer bzw. der Schweißer eine Korrektur der Lichtbogenlänge und/oder der Schweißgeschwindigkeit 65 sowie der Lichtbogendynamik vornehmen, d.h., daß durch das taktweise Anzeigen der Benutzer die Möglichkeit hat, durch Betätigen eines Einstellorganes das taktweise Anzeigen der einzelnen Schweißparameter zu unterbrechen, worauf über den Hauptregler 48 der Benutzer noch eventuelle Korrekturen vornehmen kann. Betätigt der Benutzer wiederum ein Einstellorgan 47, so erfolgt eine Weiterschaltung auf den nächsten Schweißparameter.

Weiters ist es beispielsweise möglich, daß für die Einstellung des a-Maßes 64 das Anzeigeorgan 66 ausgewählt werden kann, worauf nach Abschluß der einzelnen Eingaben der Parameter der Benutzer das Anzeigeorgan 66 der Schweißgeschwindigkeit 65 auswählt, sodaß eine Anzeige des errechneten Wertes an der Ein- und/oder Ausgabevorrichtung 22 durchgeführt wird. Bei einem Schweißprozeß kann die Überwachung der Schweißgeschwindigkeit 65 automatisch von dem Schweißgerät 1, insbesondere von der Steuervorrichtung 4, wie es bei dem Ausführungsbeispiel in Fig. 7 beschrieben ist, erfolgen. Selbstverständlich ist es möglich, daß die Überwachung der Schweißgeschwindigkeit durch eine übergeordnete und/oder untergeordnete externe Steuervorrichtung, wie z.B. eine SPS, durchgeführt werden kann.

Weiters ist es nämlich möglich, daß bei Auswahl der Anzeigeorgane 66 sich der Benutzer vorab die einzelnen berechneten Soll-Werte über die Ein- und/oder Ausgabevorrichtung 22 anschauen kann, sodaß anschließend durch Betätigung eines Einstellorgans 47 der Benutzer eine Änderung der hinterlegten Soll-Werte vornehmen kann. Selbstverständlich ist es auch möglich, daß in der Speichervorrichtung 29 unterschiedliche Soll-Werte für die unterschiedlichen Schweißprozesse hinterlegt sind, d.h., daß für eine Handschweißung andere Soll-Werte als für eine Roboterschweißung hinterlegt sind, wobei durch Auswahl des Parameters für die Handschweißung jene Parameter, die für die Handschweißung hinterlegt sind, angezeigt werden.

Durch die unterschiedlich hinterlegten Soll-Werte für eine Handschweißung und eine Roboterschweißung wird erreicht, daß die Überwachung des Schweißprozesses, insbesondere in bezug auf die Schweißgeschwindigkeit 65, erleichtert wird, da ein direkter Datenaustausch bzw. eine direkte Steuerung mit einem Schweißroboter durchgeführt werden kann, wodurch eine exakte Prozeßsteuerung möglich ist, d.h., daß durch Verbinden des Schweißgerätes 1, insbesondere der Steuervorrichtung 4, über eine Schnittstelle mit der Steuervorrichtung des Schweißroboters ein direkter Einfluß auf den Steuervorgang des Schweißroboters vorgenommen werden kann und somit eine exakte Steuerung bzw. Prozeßführung für eine Kehlnaht möglich ist. Selbstverständlich ist es möglich, daß die Steuerung des Schweißroboters in die Steuerung des Schweißgerätes 1 eingreifen kann.

Der Vorteil durch die Aufnahme des a-Maßes 64 in das Schweißprogramm eines Schweißgerätes 1 bzw. einer Steuervorrichtung 4 liegt nun darin, daß der Benutzer bzw. der Schweißer bei der Einstellung des Schweißgerätes 1 zur Durchführung einer Schweißnaht, insbesondere einer Kehlnaht, von der Steuervorrichtung 4 unterstützt wird, wodurch Fehleingaben für Schweißungen verhindert werden. Weiters ist es durch die Mitaufnahme des a-Maßes 64 möglich, daß ein nicht trainiertes Fachpersonal ohne aufwendige Probeschweißungen eine entsprechend den Schweißzeichnungen vorgegebene Kehlnaht erstellen kann und somit wiederum Fehlschweißungen bzw. eine Schweißraupe mit zu geringer Fläche verhindert wird.

Weiters ist es möglich, daß durch Abspeichern voreingestellter Werte eine Anpassung an die persönlichen Eigenschaften eines Benutzer Rücksicht genommen werden kann, wie dies beispielsweise bei dem Schweißparameter der Schweißgeschwindigkeit 65 der Fall ist, sodaß der Benutzer beim Durchführen des Schweißprozesses diesen mit einer Schweißgeschwindigkeit 65, die er sich im Laufe der Jahre angewöhnt hat, durchführen kann. Hierzu wird durch die Einstellung des a-Maßes 64 nunmehr erreicht, daß entsprechend der eingegebenen bzw. angewohnten Schweißgeschwindigkeit 65 des Benutzers die weiteren Parameter für eine vorgegebene Kehlnaht angepaßt werden können. Selbstverständlich ist es möglich, daß der Benutzer eine Probeschweißung durchführen kann, sodaß die angewohnte Schweißgeschwindigkeit 65 vom Benutzer ermittelt wird und anschließend in der Speichervorrichtung 29 hinterlegt werden kann, wodurch bei Auswahl der weiteren Parameter für das a-Maß 64 die persönliche Schweißgeschwindigkeit 65 des Benutzers für die Berechnung einer vorgegebenen Kehlnaht herangezogen wird und somit die Anpassung der unterschiedlichen Einstellungen, wie der Drahtvorschubgeschwindigkeit, der Lichtbogenlänge, usw. ermittelt wird. Selbstverständlich ist es möglich, daß mehrere persönliche Daten für einen oder mehrere Benutzer hinterlegt werden, sodaß durch Auswahl einer entsprechenden Schweißgeschwindigkeit 65 wiederum eine Anpassung an die unterschiedlichsten Benutzer von der Steuervorrichtung 4 durchgeführt wird.

Durch die Verwendung des Schweißparameters des a-Maßes 64 wird weiters erreicht, daß eine leichte Parameterfindung bei automatisierten Schweißungen, insbesondere bei Roboterschweißungen, erzielt wird, da durch die Auswahl der einzelnen Schweißparameter und durch das automatische Berechnen der Benutzer keine entsprechenden Probeschweißungen mit dem Schweißroboter durchführen muß. Hierzu ergibt sich der große Vorteil, daß der Schweißroboter an die berechnete Schweißgeschwindigkeit 65 leicht angepaßt werden kann, ohne daß dabei eine Überwachung der Schweißgeschwindigkeit 65, insbesondere des Schweißbrenners 10, durchgeführt werden muß.

Führt der Benutzer einen Schweißprozeß mit den neu eingeführten Sonderfunktionen, insbesondere dem neu eingefügten Schweißparameter des a-Maßes 64, durch, so werden von der Steuervorrichtung 4 zuerst die einzelnen Schweißparamter, wie beispielsweise der Schweißstrom, der Drahtvorschub, die Schweißspannung, die Schweißgeschwindigkeit 65, usw., berechnet, sodaß eine automatische bzw. selbständige Einstellung des Schweißgerätes 1 durch Vorgabe der Schweißparameter von der Steuervorrichtung 4 durchgeführt wird. Der Benutzer muß bzw. kann jedoch zur Berechnung des Schweißprozesses einige Schweißparamter, wie beispielsweise den Schweißstrom, die Fläche bzw. den Querschnitt der Schweißnaht, insbesondere das a-Maß 64, vorgeben. Werden jedoch vom Benutzer keine bzw. zu wenige Schweißparamter vorgegeben, so werden von der Steuervorrichtung 4 die in der Speichervorrichtung 29 hinterlegten Soll-Werte für die Berechnung herangezogen, d.h., daß in der Speichervorrichtung 29 für unterschiedliche Schweißnahtquerschnitte, also der Fläche der Schweißnaht, nämlich das a-Maß 64, die zur Bildung einer derartigen Schweißnaht benötigten Soll-Werte der Schweißparameter hinterlegt sind. Diese Soll-Werte können vom Hersteller des Schweißgerätes 1 vorgegeben sein bzw. ist es möglich, daß der Benutzer bei der Inbetriebnahme des Schweißgerätes 1 zuerst derartige Soll-Werte hinterlegt.

Der Benutzer hat somit die Möglichkeit, daß er durch einfaches Auswählen eines Schweißnahtquerschnittes, insbesondere eines Soll-Wertes des a-Maßes 64, einen Schweißprozeß durchführen kann, ohne daß dabei ein entsprechendes Fachwissen für die Einstellung des Schweißgerätes 1 zur Bildung einer vorgegebenen Schweißnaht notwendig ist. Werden jedoch vom Benutzer einige Schweißparameter, wie beispielsweise der Schweißstrom, die Schweißgeschwindigkeit 65, usw., vorgegeben, so wird von der Steuervorrichtung 4 eine neue Berechnung für den Schweißprozeß durchgeführt, wobei jedoch die vorgegebenen bzw. eingestellten Schweißparameter beibehalten werden und die weiteren nicht vorgegebenen Schweißparamter an diese angepaßt werden. Durch ein derartiges Vorgehen wird erreicht, daß der Benutzer einen Schweißprozeß, indem er seine persönlichen Schweißeigenschaften bzw. Schweißerfahrungen in die Berechnung bzw. in den Schweißprozeß einbringen kann, durchführen kann.

Tritt jedoch der Fall ein, daß ein oder mehrere Schweißparameter nicht mehr von dem Schweißgerät 1 durchgeführt werden können, d.h., daß diese Schweißparameter außerhalb der vorgegebenen Grenzwerte liegen, so werden diese von der Steuervorrichtung 4 an der Ein- und/oder Ausgabevorrichtung 22 angezeigt. Dabei ist es möglich, daß von der Steuervorrichtung 4 ein Warnsignal ausgesandt wird und/oder die Anzeige der Schweißparameter zu blinken beginnt, sodaß der Benutzer auf diesen Zustand aufmerksam gemacht wird. Der Benutzer hat dann die Möglichkeit, einige Schweißparameter zu ändern bzw. neu vorzugeben, sodaß eine neuerliche Berechnung der einzelnen Schweißparameter durchgeführt wird. Selbstverständlich ist es möglich, daß der Benutzer diese voreingestellten Grenzwerte ebenfalls verändern kann, sodaß mit den berechneten Schweißparametern ein Schweißprozeß durchgeführt wird.

Da der Benutzer die Möglichkeit hat, zwischen einer manuellen, halbautomatischen oder automatischen Schweißung, insbesondere einer Handschweißung und einer Roboterschweißung, zu unterscheiden, sind auch die vorgegebenen Grenzwerte für die beiden Schweißarten unterschiedlich definiert, da es beispielsweise möglich ist, daß bei einer Roboterschweißung eine höhere Schweißgeschwindigkeit 65 durchgeführt werden kann als bei einer Handschweißung.

Es bestehen nunmehr mehrere Möglichkeiten, wie die vorgegebenen Soll-Werte in der Speichervorrichtung 29 hinterlegt sein können. Dabei ist es möglich, daß für jeden Schweißnahtquerschnitt, insbesondere für die am häufigsten benötigten Schweißnahtquerschnitte, die einzelnen zur Bildung dieses Schweißnahtquerschnittes benötigten zusätzlichen Schweißparameter hinterlegt sind, wobei bei einem derartigen Speicherverfahren der einzelnen Soll-Werte ein hoher Speicherbedarf benötigt wird.

Erfindungsgemäß ist weiters vorgesehen, daß in der Speichervorrichtung 29 die Soll-Werte für zumindest einen Schweißparameter eines Schweißverfahrens für die Minimum- und Maximum-Werte in Form einer Minimum- und Maximum-Kurve gespeichert werden, d.h., daß beispielsweise in der Speichervorrichtung 29 für einen Minimum- und einen Maximum-Schweißnahtquerschnitt sämtliche Schweißparameter hinterlegt sind, wobei diese Soll-Werte gleichzeitig die Grenzwerte für die möglichen Schweißeinstellungen bilden. Es kann damit gesagt werden, daß die Soll-Werte für ein Schweißverfahren durch eine Mehrzahl von Minimum- und Maximum-Werten bzw. einer Minimum- und Maximum-Kurve gebildet sind. Damit jedoch auch Schweißnähte mit einem Querschnitt zwischen diesen beiden Kurven durchgeführt werden können, wird von der Steuervorrichtung 4 für dazwischenliegende Schweißnahtquerschnitte ein Interpolationsberechnungsverfahren eingesetzt, d.h., daß aufgrund der vorgegebenen Minimum- und Maximum-Kurve eine Berechnung der zwischen diesen beiden Kurven liegenden Werte bzw. Schweißparameter durchgeführt wird.

Dieses Verfahren zum Speichern einer Minimum- und einer Maximum-Kurve zu einem bestimmten Schweißverfahren bzw. Schweißart oder Schweißparameter, insbesondere die einzelnen Schweißnahtparameter, kann daher derartig definiert werden, daß bei einem oder mehreren Schweißverfahren bzw. Schweißarten oder Schweißparametern (Schweißnahtparameter), beispielsweise für die Schweißnahteinstellung, wie dem Schweißnahtquerschnitt oder Schnell- und Langsam-Schweißen, usw., nunmehr jeweils eine Minimum-Kurve und eine Maximum-Kurve der unterschiedlichsten Schweißparameter, wie beispielsweise für den Schweißstrom, den Pulsstrom, die Schweißspannung 55, die Pulsfrequenz, die Drahtvorschubgeschwindigkeit 54, der Schweißgeschwindigkeit 65, usw., zu diesem Schweißverfahren bzw. dieser Schweißart oder Schweißparameter (Schweißnahtparameter) gekoppelt hinterlegt sind. Dabei werden die einzelnen Minimum- und Maximum-Kurven aus mehreren einzelnen Soll-Werten der gekoppelten Schweißparameter gebildet, sodaß eine Verschachtelung der einzelnen Minimum-Kurven sowie der einzelnen Maximum-Kurven untereinander gebildet werden kann.

Durch das Berechnungsverfahren, insbesondere das Interpolationsberechnungsverfahren, können anschließend die dazwischenliegenden Werte bzw. Soll-Werte bei einer Einstellung des Schweißverfahrens (Schweißnahtparameter) zwischen der Minimum-Kurve und der Maximum-Kurve ermittelt werden. Dabei ist es auch möglich, daß zwischen der Minimum-Kurve und der Maximum-Kurve weitere Kurven abgespeichert werden, sodaß eine dem Schweißprozeß exakt angepaßte, genauere Berechnung zwischen den einzelnen Kurven durchgeführt wird.

Durch diese Art der Speicherung in Form von mehreren verknüpften Kurven wird auch erreicht, daß durch mehrere Soll-Werte in den einzelnen Kurven sogenannte Zwischenkurven bzw. Diagramme gebildet werden, da beispielsweise eine Kurve aus mehreren Soll-Werten, z.B. vier Soll-Werte für jeden Schweißparameter, gebildet wird und über das Interpolationsberechnungsverfahren die weiteren Schweißparameter innerhalb einer Kurve und gleichzeitig zwischen der Minimum- und Maximum-Kurve liegenden, eingestellten Schweißverfahren bzw. Schweißart oder Schweißparameter (Schweißnahtparameter) errechnet wird.

Durch diese Hinterlegung mehrerer Kurven, insbesondere durch das Berechnen der Soll-Werte, wird eine sogenannte dreidimensionale Kennlinie für den Schweißprozeß geschaffen, da als Grundlage die hinterlegten Kurven verwendet werden und die weiteren Soll-Werte in einem oder mehreren Berechnungsvorgängen berechnet werden.

Damit ein derartiges Verfahren eingesetzt werden kann, ist es für das Interpolationsberechnungsverfahren erforderlich, daß der Benutzer zumindest zwei Schweißparameter (Schweißnahtparameter) voreinstellen muß. Selbstverständlich ist es möglich, daß mehrere unterschiedliche Schweißparameter (Schweißnahtparameter) eingestellt werden können. Der Benutzer kann beispielsweise bei der Einstellung des Schweißnahtquerschnittes einen Soll-Wert zwischen den einzelnen Minimum- und Maximum-Kurven für den Schweißnahtquerschnitt und eine Stromhöhe (Leistung) vorgeben, sodaß nunmehr das Interpolationsberechnungsverfahren die weiteren Soll-Werte für die weiteren gekoppelten Schweißparameter ermitteln kann und somit zwischen den Minimum- und Maximum-Kurven liegende weitere Kurven der einzelnen Schweißparameter erzeugt, mit denen anschließend der Schweißprozeß durchgeführt wird.

Hierzu muß der Benutzer nur einen entsprechenden Schweißnahtquerschnitt, also das a-Maß 64, über die Ein- und/oder Ausgabevorrichtung 22 einstellen, sodaß anschließend durch die Berechnung über das Interpolationsberechnungsverfahren die weiteren Schweißparamter festgelegt werden und somit eine selbständige Einstellung des Schweißgerätes 1 auf die berechneten bzw. ermittelten Schweißparameter von der Steuervorrichtung 4 durchgeführt werden kann.

Das Einstellen des Schweißnahtquerschnittes oder der Maßangaben für eine Schweißnaht kann der Benutzer durch den Aufruf bzw. die Auswahl des a-Maßes 64 oder der weiteren möglichen Zusatzparameter, wie beispielsweise des Nahtbreitenmaßes "b" oder des Schenkelmaßes "z", vornehmen. Damit der Benutzter erkennen kann, welche der Zusatzfunktionen bzw. der Schweißparameter von ihm eingestellt werden müssen, ist es möglich, daß, wie an der Ein- und/oder Ausgabevorrichtung 22 gezeigt, zwei 7-Segmentanzeigen 67 oder 68 angeordnet bzw. angesteuert werden, wobei dabei an einer 7-Segmentanzeige 67 oder 68 eine Kurzinformation, z.B.: a-M, b-M oder z-M, angezeigt wird und auf der weiteren 7-Segmetanzeige 67 oder 68 der dazugehörige Soll- bzw. Ist-Wert erscheint. Der Benutzer kann nunmehr, je nach Ausführung des Schweißgerätes 1, über den Hauptregler oder beispielsweise über ein Einstellorgan 47 oder eine Tastatur eine Änderung des angezeigten Wertes vornehmen. Hierzu ist es möglich, daß der Benutzer nur einen Zusatzparameter, insbesondere einen Schweißparameter, einstellen kann, sodaß anschließend ein selbständiges Berechnen der weiteren Schweißparameter durchgeführt wird. Durch ein derartiges Berechnungsverfahren wird eine sogenannte dreidimensionale Kennlinie erreicht.

Vorteilhaft ist hierbei, daß eine erheblichere Speicherplatzeinsparung erzielt wird, wobei für verschiedenste Schweißarten bzw. Schweißverfahren durch den geringen Platzbedarf eine große Anzahl unterschiedlicher Minimum- und Maximum-Kurven hinterlegt werden können.

Bei einem derartigen Berechnungsmodus ist es selbstverständlich wiederum möglich, daß der Benutzer einige Schweißparameter für die Berechnung, insbesondere für das Interpolationsberechnungsverfahren, vorgeben kann, sodaß diese Schweißparameter beibehalten werden und die verbleibenden Schweißparameter an die eingegebenen Schweißparameter angepaßt werden. Es ist auch möglich, daß der Benutzer sämtliche Schweißparameter vorgibt, worauf von der Steuervorrichtung 4 anschließend der Schweißnahtquerschnitt, nämlich das a-Maß 64 und die Schweißgeschwindigkeit 65, ermittelt werden.

Durch die Mitaufnahme der Schweißparameter, insbesondere der Zusatzfunktion, zum Berechnen des Schweißnahtquerschnittes ist es auch möglich, daß während eines Schweißprozesses eine Anpassung der weiteren Schweißparameter, wie beispielsweise des Drahtvorschubes, der Schweißspannung, des Schweißstromes, der Schweißgeschwindigkeit, von der Steuervorrichtung 4 durchgeführt werden kann, d.h., daß bei Änderung eines Schweißparameters, beispielsweise der Schweißgeschwindigkeit 65 mit vorgegebenem a-Maß 64, während des Schweißprozesses eine Anpassung der weiteren Schweißparameter, wie beispielsweise des Drahtvorschubes, erfolgen kann, sodaß wiederum sichergestellt ist, daß eine entsprechende Schweißnaht gebildet werden kann. Dazu ist es möglich, daß die Anpassung der einzelnen Schweißparameter über die Regelung der Soll-Werte oder der Ist-Werte durchgeführt wird, d.h., daß bei einer Regelung nach den vorgegebenen Soll-Werten erst eine Änderung der weiteren Schweißparameter durchgeführt wird, wenn während des Schweißprozesses von der Steuervorrichtung 4 ein neuer Soll-Wert vorgegeben wird, wobei bei einer Regelung nach den Ist-Werten des Schweißgerätes 1 eine ständige Anpassung der einzelnen Schweißparameter an die unterschiedlichen Ist-Werte durchgeführt wird.

Durch die Anwendung eines Interpolationsberechnungsverfahren, also durch Speicherung einer Minimum- und einer Maximum-Kurve für eine bestimmte Schweißart, ist es möglich, daß aufgrund des geringen Speicherbedarfs noch zusätzliche Parameter für die Berechnung eingefügt werden können. Dabei ist es möglich, daß beispielsweise das Material des Werkstückes 16, die Legierung des Werkstückes 16, das Gasgemisch, usw., für die Berechnung der einzelnen Schweißparameter herangezogen werden kann.

Durch die Möglichkeit zur Berechnung der einzelnen Schweißparameter bei einer vorgegebenen Schweißnaht, insbesondere eines Schweißnahtquerschnittes, ist es auch möglich, daß im Schweißgerät 1, insbesondere in der Speichervorrichtung 29, eine Expertendatenbank angeordnet ist, sodaß der Benutzer über die Ein- und/oder Ausgabevorrichtung 22 oder über eine externe Komponente, wie beispielsweise einen Computer, auf diese zugreifen kann, sodaß durch Auslesen dieser Daten, der Benutzer entsprechend seiner Problemstellung Vergleichslösungen aufsuchen kann und anschließend diese Lösung der Steuervorrichtung 4 für die Geräteeinstellung zuteilt, sodaß eine automatische Einstellung des Schweißgerätes 1 durchgeführt wird. Selbstverständlich ist es möglich, daß der Benutzer diese Expertendatenbank mit seinem Fachwissen erweitern kann, sodaß dieser jederzeit die Möglichkeit hat, bei abermaligem Auftreten einer Problemlösung auf diese Daten zurückzugreifen.

Weiters ist es möglich, daß der Benutzer über das Schweißgerät 1 eine Berechnung der Streckenenergie durchführen kann, wobei die ermittelten Werte für die Berechnung des a-Maßes 64 herangezogen werden können.

Hierzu ist es möglich, daß bei Auswahl des Schweißparameters des a-Maßes 64 die für die Berechnung der Streckenenergie benötigten Parameter von dem Schweißgerät 1 abgerufen bzw. die bereits eingestellten Parameter verwendet werden. Der Benutzer kann wiederum über die Ein- und/oder Ausgabevorrichtung 22 die einzelnen Parameter einstellen bzw. werden die bereits eingestellten Parameter für die Berechnung herangezogen.

Für die Berechnung der Streckenenergie wird von der Steuervorrichtung 4 die aus dem Stand der Technik bekannte Formel

$$E = I * U * 60 / v$$

verwendet, wobei die Streckenenergie "E" sich durch den Schweißstrom "I" mal der Lichtbogenspannung "U" mal dem Umrechnungsfaktor auf Minuten "60" durch die Schweißgeschwindigkeit "v" zusammensetzt.

Es ist auch möglich, daß über das Schweißgerät 1 eine Berechnung der Wärmeeinbringung durchgeführt werden kann. Die Wärmeeinbringung definiert sich beim Schweißen als die beim Schweißprozeß je Längeneinheit einer Schweißraupe bzw. einer Schweißnaht eingebrachte thermische Energie, insbesondere Wärme. In diesem Fall wird von der Steuervorrichtung 4 die berechnete Streckenenergie "E" mit dem thermischen Wirkungsgrad "n" des jeweils eingestellten bzw. durchgeführten Schweißverfahrens multipliziert, um die Wärmeeinbringung "WE" zu erhalten, sodaß sich die Formel

$$WE = E * n$$

ergibt.

Hierzu hat der Benutzer die Möglichkeit, daß dieser über die Ein- und/oder Ausgabevorrichtung 22 ein entsprechendes Schweißverfahren auswählen kann, sodaß von der Steuervorrichtung 4 ein in der Speichervorrichtung 29 hinterlegter Wert für den Wirkungsgrad "n" zur Berechnung herangezogen wird. Der relative thermische Wirkungsgrad "n" ist das Verhältnis des Wirkungsgrades des in Betracht kommenden Schweißverfahrens zu demjenigen des Unter-Pulver-Schweißens, wodurch in der Speichervorrichtung 29 eine entsprechende Tabelle für die unterschiedlichen Schweißverfahren hinterlegt sein können.

Die Multiplikatoren für die jeweiligen Schweißverfahren könnten beispielsweise wie folgt lauten:

| | |
|---|---|
| Unter-Pulver-Schweißen | n=1 |
| Lichtbogenhandschweißen mit basisch umhüllter Elektrode | n=0,9 |
| Lichtbogenhandschweißen mit rutil umhüllter Elektrode | n=0,8 |
| Metall-Aktivgasschweißen | n=0,85 |
| Metall-Inertgasschweißen | n=0,75 |
| Wolfram-Inertgasschweißen | n=0,65 |

Selbstverständlich ist es möglich, daß der Benutzer die obgenannten Werte über die Ein- und/oder Ausgabevorrichtung 22 verändern kann.

Durch die Berechnung der Streckenenergie und der Wärmeeinbringung wird erreicht, daß der Benutzer eine exakte Einstellung des Schweißgerätes 1 für eine vorgegebene Schweißnaht vornehmen kann, und somit fehlerhafte Schweißnähte verhindert werden.

Bei den zuvor beschriebenen Schweißverfahren zur Einstellung bzw. Eingabe einer Schweißnaht für die Bildung eines Schweißprozesses ist es auch möglich, daß für die Berechnung festgelegte Schweißparameter, wie der Drahtvorschub, als Vorgabewerte definiert sind, sodaß die restlichen Schweißparameter, wie die Schweißgeschwindigkeit 65, der Schweißstrom, usw., ausgehend von diesen Schweißparametern errechnet werden.

Selbstverständlich ist es möglich, daß aufgrund der Überwachung der einzelnen Schweißparameter die ermittelten bzw. gemessenen Werte in der Speichervorrichtung 29 gespeichert werden können, sodaß nach Beendigung des Schweißprozesses eine Auswertung der einzelnen Werte bzw. Daten durchgeführt werden kann.

Dabei ist es möglich, daß durch die Vorgabe der Schweißgeschwindigkeit 65 und/oder der Drahtvorschubgeschwindigkeit 54 von der Steuervorrichtung 4 der Verbrauch des Zusatzmaterials, insbesondere des Schweißdrahtes 13, bzw. die Abschmelzleistung "P" in kg/h berechnet werden kann. Die Abschmelzleistung kann von der Steuervorrichtung durch das spezifische Gewicht des Zusatzmaterials, insbesondere des Schweißdrahtes 13, ermittelt werden. Selbstverständlich ist es möglich, daß für die Berechnung der Abschmelzleistung bzw. des verbrauchten Zusatzmaterials jede beliebige aus dem Stand der Technik bekannte Formel bzw. jedes beliebige Verfahren eingesetzt werden kann. Hierzu ist es beispielsweise möglich, daß durch die nachstehende Formel eine Berechnung der Abschmelzleistung durchgeführt wird. Für die nachstehende Formel werden folgende Abkürzungen verwendet:

Abschmelzleistung: "P in kg/h"
Zusatzmaterialdurchmesser: "d"
Querschnitt des Zusatzmaterials, insbesondere des Schweißdrahtes 13:

$$A_z = ( d^2 * \pi )/4$$

Drahtvorschubgeschwindigkeit: "$v_{draht}$"
Dichte des Zusatzwerkstoffes: "p"

und ein Umrechnungsfaktor auf "kg/h" durch 1000 bzw. 60.

$$P = (A_z * v_{draht} * p * 60 ) / 1000$$

Durch ein derartiges Ermittlungsverfahren der Abschmelzleistung bzw. des Verbrauches des Zusatzmaterials hat der Benutzer nunmehr die Möglichkeit, daß nach einem Schweißprozeß die verbrauchte Menge des Schweißdrahtes 13 ermittelt werden kann, sodaß er für einen weiteren Schweißprozeß abschätzen kann, wieviel Schweißdraht 13 sich noch auf der Vorratstrommel 14 befindet. Selbstverständlich ist es möglich, daß eine derartige Berechnung durch Vorabeingabe der Größe der Vorratstrommel 14 über die Steuervorrichtung 4 durchgeführt werden kann.

Selbstverständlich ist es möglich, daß weitere Auswerteverfahren über die Steuervorrichtung 4 durchgeführt werden können.

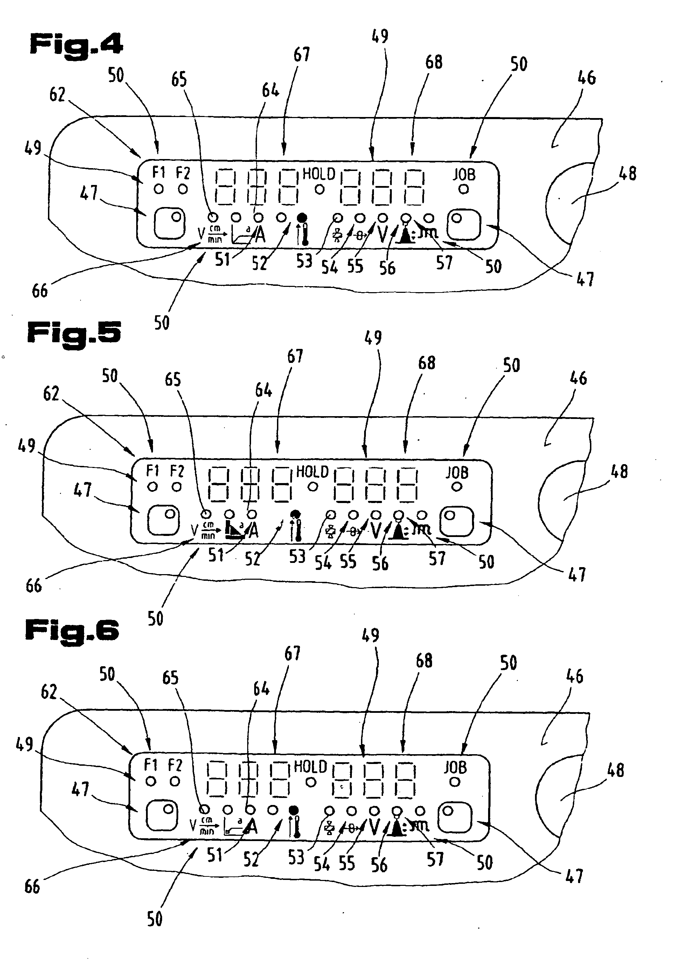

In den Fig. 4 bis 6 ist ein Teilbereich einer Ausführungsvariante der Ein- und/oder Ausgabevorrichtung 22 zum Einstellen des a-Maßes 64 und der Schweißgeschwindigkeit 65 gezeigt. Hierbei sind die Anzeigeorgane 66 mit den unterschiedlichsten Symbolen 50 dargestellt.

Die Funktion zur Anpassung bzw. Einstellung des a-Maßes 64 über die Anzeigeorgane 66 entspricht der Beschreibung der zuvor beschriebenen Figuren. Die symbolhafte Darstellung entspricht dabei den genormten Symbolen 50 zur Darstellung von Kehlnähten, sodaß ein Benutzer beim Verwenden eines derartigen Schweißgerätes 1 sofort erkennen kann, daß über diese Symbole 50, insbesondere die Anzeigeorgane 66, eine Einstellung des a-Maßes 64 und der Schweißgeschwindigkeit 65 jederzeit möglich ist.

In Fig. 7 ist ein Verfahren zum Ermitteln der Schweißgeschwindigkeit des Schweißbrenners 10 gezeigt. Bei dem dargestellten Schweißverfahren wird, wie in den zuvor beschriebenen Figuren, eine Kehlnaht 69 in Form einer Schweißraupe 70, insbesondere einer Schweißnaht, mit dem erfindungsgemäßen Schweißgerät 1 bzw. mit einem entsprechenden Steuerverfahren erzeugt.

Damit eine Kehlnaht 69 entsprechend den Angaben aus einer Schweißzeichnung zwischen zwei Werkstücken 16 und 71, die in einem Winkel beispielsweise von 90° miteinander verschweißt werden sollen, gebildet werden kann, muß der Benutzer entsprechend den Vorgaben aus der Schweißzeichnung eine Einstellung des Schweißgerätes 1, wie es in den zuvor beschriebenen Figuren erläutert ist, vornehmen.

Zur Überwachung der Schweißgeschwindigkeit ist es nunmehr möglich, daß der Schweißbrenner 10, wie bei dem dargestellten Ausführungsbeispiel gezeigt, beispielsweise von einem Benutzer von Hand entlang den beiden Kanten der Werkstücke 16 und 71 geführt wird. Damit die Schweißgeschwindigkeit ermittelt werden kann, ist im Schweißgerät 1 eine Geschwindigkeitsmeßvorrichtung angeordnet.

Diese Geschwindigkeitsmeßvorrichtung ist im Schweißgerät 1, insbesondere in der Steuervorrichtung 4, softwaremäßig und hardwaremäßig realisiert, sodaß durch das Starten eines Schweißprozesses von der Steuervorrichtung 4 die Schweißgeschwindigkeit des Schweißbrenners 10 automatisch bzw. selbständig ermittelt werden kann. Selbstverständlich ist es möglich, daß der Benutzer die Überwachung der Schweißgeschwindigkeit deaktivieren kann und somit eine Schweißung entsprechend seiner Erfahrungswerte ohne Einflüsse der Geschwindigkeitsmeßvorrichtung durchführen kann.

Damit eine Überwachung der Schweißgeschwindigkeit und ein Schweißprozeß durchgeführt werden kann, müssen die beiden Werkstücke 16, 71, wie es aus dem Stand der Technik bekannt ist, über zumindest einen Kontakt 72 mit dem Schweißgerät 1 verbunden werden, wodurch ein Stromfluß bzw. Stromkreis vom Schweißbrenner 10 über den Kontakt 72 mit der Inverterstromquelle 31 geschaffen werden kann, d.h., daß durch das Ansteuern des Schweißbrenners 10 mit Energie ein Stromkreis über die Werkstücke 16, 71 aufgebaut wird. Der Stromkreis entsteht durch die Ausbildung des Lichtbogens 15 zwischen dem Schweißdraht 13 und dem Werkstück 16 oder 71, wobei aufgrund des Lichtbogens 15 eine Abschmelzung des Schweißdrahtes 13 erfolgt und somit die Schweißraupe 70 gebildet wird.

Damit nunmehr eine Geschwindigkeitsüberwachung des Schweißbrenners 10 erfolgen kann, wird das Werkstück 16 bzw. 71 mit zusätzlichen Meßkontakten 73, 74 kontaktiert. Diese Meßkontakte 73, 74 sind potentialfreie Kontakte, d.h., daß der Hauptstrom, der über das Werkstück 16, 71 fließt, nicht über die beiden Meßkontakte 73, 74 sondern über den Kontakt 72 an das Schweißgerät 1 zurückgeführt wird. Weiters ist ein weiterer Meßkontakt 75 bzw. Meßpunkt im Schweißbrenner 10 angeordnet. Die einzelnen Meßkontakte 73 bis 75 sind über Leitungen mit der Steuervorrichtung 4 verbunden, sodaß über die Meßkontakte 73 bis 75 die Steuervorrichtung 4 die Schweißgeschwindigkeit des Schweißbrenners 10 ermitteln kann.

Damit jedoch der Benutzer bzw. der Schweißer von der Steuervorrichtung 4 auf die Richtigkeit der Schweißgeschwindigkeit, also der Führungsgeschwindigkeit des Schweißbrenners 10, aufmerksam gemacht werden kann, ist es möglich, daß der Schweißbrenner 10 zusätzlich zumindest ein Anzeigeorgan 76, bevorzugt jedoch drei Anzeigeorgane 76 bis 78 aufweist. Die Anzeigeorgane 76 bis 78 können bevorzugt als Leuchtdioden ausgebildet sein, wobei beispielsweise jedes Anzeigeorgan 76 bis 78 aus unterschiedlichen Farben, insbesondere aus den Farben Rot, Grün und Gelb, gebildet sein können. Die einzelnen Anzeigeorgane 76 bis 78 werden wiederum über die Steuervorrichtung 4 angesteuert bzw. aktiviert, wodurch das entsprechend angesteuerte Anzeigeorgan 76 bis 78 zu leuchten beginnt und somit der Benutzer erkennen kann, ob die Schweißgeschwindigkeit mit der über die Ein- und/oder Ausgabevorrichtung 22 eingestellten Schweißgeschwindigkeit übereinstimmt oder abweicht.

Hierzu ist es möglich, daß jeweils ein Anzeigeorgan 76 bis 78 einen Zustand für die Schweißgeschwindigkeit anzeigt, d.h., daß beispielsweise beim Leuchten des Anzeigeorgans 76 der Benutzer aufmerksam gemacht wird, daß eine zu hohe Vorwärtsbewegung des Schweißbrenners 10, also eine zu hohe Schweißgeschwindigkeit, von ihm durchgeführt wird, sodaß eine entsprechende Anpassung vom Benutzer durch Verlangsamung der Führung des Schweißbrenners 10 durchgeführt werden kann, wobei die weiteren Anzeigeorgane 77, 78 für die Anzeige der Zustände, daß die Schweißgeschwindigkeit richtig bzw. zu gering ist, verwendet werden.

Das Verfahren zum Ermitteln der Schweißgeschwindigkeit erfolgt in Form einer Widerstandsbrücke, d.h., daß durch die drei Meßpunkte bzw. Meßkontakte 73 bis 75 die Steuervorrichtung 4 in Form eines Spannungsteilers aufgrund der Veränderung der einzelnen Spannungen auf die Schweißgeschwindigkeit rückschließen kann. Hierzu wird bei der Inbetriebnahme des Schweißgerätes 1, also vor dem Start des Schweißprozesses, eine Ist-Wertmessung zwischen den beiden am Werkstück 16 oder 71 befindlichen Meßkontakten 73 bis 74 durchgeführt und somit von der Steuervorrichtung 4 die anliegende Gesamtspannung 79 ermittelt. Durch das Ermitteln der Gesamtspannung 79 wird nun eine Kalibrierung der Steuervorrichtung 4 vorgenommen, d.h., daß ausgehend von der Gesamtspannung 79 die auftretenden Teilspannungen 80, 81, die durch die Bildung des Stromkreises über den Schweißbrenner 10 zu den einzelnen am Werkstück 16 oder 71 angeordneten Meßkontakte 73, 74 auftreten, ermitteln werden, d.h., daß die Schweißgeschwindigkeit aufgrund einer über das Werkstück 16 oder 71 gebildeten Widerstandsbrücke berechnet wird. Durch die Bildung der Widerstandsbrücke werden von der Steuervorrichtung 4, ausgehend von dem Meßkontakt 75 am Schweißbrenner 10 die einzelnen Teilspannungen 80, 81 zu den Meßkontakten 73, 74 ermittelt.

Durch die Bewegung des Schweißbrenners 10 von einem Meßkontakt 74 zum weiteren Meßkontakt 73 tritt nunmehr eine Änderung der einzelnen Teilspannungen 80, 81 durch das Entfernen bzw. Näherkommen des Schweißbrenners 10 von bzw. an die Meßkontakte 73, 74 auf, d.h., daß aufgrund des Abstandes des Schweißbrenners 10, insbesondere den Übergang des Lichtbogens 15 an das Werkstück 16 oder 71, eine Widerstandsänderung in bezug auf die Meßkontakte 73, 74 entsteht und somit eine Änderung der Teilspannungen 80, 81 auftritt. Die Steuervorrichtung 4 ermittelt durch die Änderung der Teilspannungen 80, 81 in bezug auf eine voreinstellbare Zeitdauer die Geschwindigkeit der Vorwärtsbewegung des Schweißbrenners 10, also die Schweißgeschwindigkeit, sodaß durch Ansteuern der Anzeigeorgane 76 bis 78 der Benutzer auf den Zustand der Schweißgeschwindigkeit aufmerksam gemacht werden kann und somit eine Anpassung vom Benutzer durchgeführt werden kann.

Die Ermittlung der Schweißgeschwindigkeit erfolgt nun derartig, daß nach dem Kalibrieren der Steuervorrichtung 4 auf die Gesamtspannung 79 der Schweißprozeß vom Benutzer gestartet werden kann, sodaß der Lichtbogen 15 zwischen dem Werkstück 16 bzw. 71 und dem Schweißbrenner 10, insbesondere dem Schweißdraht 13 aufgebaut wird, sodaß aufgrund der Bildung des Stromflusses vom Schweißbrenner 10 über das Werkstück 16 zum Kontakt 72 eine Art Widerstandsbrücke am Werkstück 16 erzeugt wird, wobei jedoch die einzelnen Meßkontakte 73 bis 75 potentialfrei ausgebildet sind. Durch eine derartige Widerstandsbrücke entstehen durch die unterschiedlichen Abstände des Schweißbrenners 10, insbesondere durch den Lichtbogen 15, zu den Meßkontakten 73, 74 unterschiedliche Teilspannungen 80, 81, wodurch aufgrund der kontinuierlicher Messung zwischen den einzelnen Meßkontakten 73 bis 75 die Steuervorrichtung 4 unterschiedliche Teilspannungen 80 bis 81 ermittelt, wie dies beispielsweise durch die in strichlierten Linien und die in strich-punktierten Linien schematisch dargestellten Teilspannungen 80, 81 gezeigt ist.

Daraus ist ersichtlich, daß beispielsweise die Teilspannung 80 durch die Führung des Schweißbrenners 10 - gemäß Pfeil 82 - in bezug auf den Meßkontakt 74 vergrößert wird, wogegen die Teilspannung 81 in bezug auf den Meßkontakt 73 verringert wird. Durch die Ermittlung der Änderung der einzelnen Teilspannungen 80, 81 in bezug auf eine voreinstellbare Zeitdauer kann nunmehr die Steuervorrichtung 4 auf die Schweißgeschwindigkeit zurückschließen bzw. diese berechnen. Für die Ermittlung der Schweißgeschwindigkeit ist es jedoch erforderlich, daß für einen Schweißprozeß die einzelnen Meßkontakte 73, 74 an den gegenüberliegenden Enden des Werkstückes 16 oder 71 positioniert werden.

Selbstverständlich ist es möglich, daß weitere Meßkontakte bzw. Meßpunkte an dem Werkstück 16, insbesondere an den Seitenkanten des Werkstückes 16, angeordnet werden können, wodurch eine Geschwindigkeitsmessung in seitlicher Richtung durch Bildung eines weiteren Widerstandsbereiches durchgeführt werden kann. Um eine horizontale Geschwindigkeitsmessung durchführen zu können, müssen die einzelnen Meßkontakte übereinander am Werkstück 16 angeordnet werden.

Durch die automatische Ermittlung der Schweißgeschwindigkeit des Schweißbrenners 10 bei Handschweißungen ist es nunmehr möglich, daß ein exakter Schweißprozeß entsprechend den Einstellungen des a-Maßes 64 für Schweißnähte, insbesondere für Kehlnähte, durchgeführt werden kann. Selbstverständlich ist es möglich, daß die Geschwindigkeitsmessung des Schweißbrenners 10 auch für weitere Schweißverfahren eingesetzt werden kann.

Dieses Verfahren zur Ermittlung der Schweißgeschwindigkeit 65 kann an jedem beliebigen Werkstück 16, 71 aus den unterschiedlichen Materialien angewendet werden, da für die Ermittlung der Teilspannungen 80, 81 nur zumindest zwei zusätzliche Meßkontakte 73, 74 am Werkstück 16, 71 angebracht werden müssen, wobei durch eine Kalibrierung auf die Gesamtspannung 79 nunmehr auf das Material des Werkstückes 16 oder 71 nicht mehr Rücksicht genommen werden muß.

Der Vorteil einer derartigen Geschwindigkeitsmeßvorrichtung liegt nun darin, daß ohne zusätzliche externe Komponente, außer den Meßkontakten 73 bis 75, eine Überwachung der Schweißgeschwindigkeit des Schweißbrenners 10 nur über einen elektronischen Meßvorgang durchgeführt werden kann.

Selbstverständlich ist es möglich, daß alle weiteren Verfahren zur Ermittlung der Schweißgeschwindigkeit eines Schweißbrenners 10 für ein derartiges Schweißgerät 1 eingesetzt werden können. Hierzu ist es auch möglich, daß diese Verfahren über eine Schnittstelle mit der Steuervorrichtung 4 gekuppelt werden können, sodaß ein direkter Datenaustausch bzw. Datentransfer zwischen dem externen Gerät und der Steuervorrichtung 4 durchgeführt werden kann. Es ist auch möglich, daß mechanische Vorrichtungen am Schweißbrenner 10 angeordnet werden können, wodurch durch Bewegung des Schweißbrenners 10 die Schweißgeschwindigkeit ermittelt werden kann. Hierzu ist es beispielsweise möglich, daß ein federnd gelagertes Rad am Schweißbrenner 10 angeordnet ist, sodaß bei Bewegung des Schweißbrenners 10 aufgrund der Drehbewegung des Rades die Schweißgeschwindigkeit von der Steuervorrichtung 4 ermittelt werden kann.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

Bezugszeichenaufstellung

| 1 | Schweißgerät |
|---|---|
| 2 | Stromquelle |
| 3 | Leistungteil |
| 4 | Steuervorrichtung |
| 5 | Umschaltglied |

| 6 | Steuerventil |
|---|---|
| 7 | Versorgungsleitung |
| 8 | Gas |
| 9 | Gasspeicher |
| 10 | Schweißbrenner |

| 11 | Drahtvorschubgerät |
|---|---|
| 12 | Versorgungsleitung |
| 13 | Schweißdraht |
| 14 | Vorratstrommel |
| 15 | Lichtbogen |

| | |
|---|---|
| 16 | Werkstück |
| 17 | Versorgungsleitung |
| 18 | Versorgungsleitung |
| 19 | Kühlkreislauf |
| 20 | Strömungswächter |
| 21 | Wasserbehälter |
| 22 | Ein- und/oder Ausgabevorrichtung |
| 23 | Mikroprozessorsteuerung |
| 24 | Leitung |
| 25 | Leitung |
| 26 | Eingabevorrichtung |
| 27 | Ausgabevorrichtung |
| 28 | Bussystem |
| 29 | Speichervorrichtung |
| 30 | Leitung |
| 31 | Inverterstromquelle |
| 32 | Versorgungsleitung |
| 33 | Versorgungsleitung |
| 34 | Spannungsversorgungsnetz |
| 35 | Hochfrequenzgenerator |
| 36 | Leitung |
| 37 | Leitung |
| 38 | Meßvorrichtung |
| 39 | Shunt |
| 40 | Leitung |
| 41 | Leitung |
| 42 | Wandlervorrichtung |
| 43 | Leitung |
| 44 | Leitung |
| 45 | Leitung |
| 46 | Frontplatte |
| 47 | Einstellorgan |
| 48 | Hauptregler |
| 49 | Anzeigeorgan |
| 50 | Symbol |
| 51 | Schweißstrom |
| 52 | Übertemperatur |
| 53 | Materialstärke |
| 54 | Drahtvorschubgeschwindigkeit |
| 55 | Schweißspannung |
| 56 | Lichtbogenlänge |
| 57 | Stromanstieg |
| 58 | Drahtdurchmesser |
| 59 | Gasmischung |
| 60 | Schweißprozeß |
| 61 | Zusatzfunktion |
| 62 | Speicherelement |
| 63 | Speichertaste |
| 64 | a-Maß |

65    Schweißgeschwindigkeit

66    Anzeigeorgan
67    7-Segmentanzeige
68    7-Segmentanzeige
69    Kehlnaht
70    Schweißraupe

71    Werkstück
72    Kontakt
73    Meßkontakt
74    Meßkontakt
75    Meßkontakt

76    Anzeigeorgan
77    Anzeigeorgan
78    Anzeigeorgan
79    Gesamtspannung
80    Teilspannung
81    Teilspannung
82    Pfeil

**Patentansprüche**

1.  Verfahren zum Steuern eines Schweißgerätes bzw. einer Stromquelle, bei dem über eine Ein- und/oder Ausgabevorrichtung unterschiedliche Schweißparameter, wie beispielsweise ein Schweißstrom, ein Schweißdrahtdurchmesser, ein Schweißverfahren u.s.w., von einem Benutzer eingestellt werden, wobei die eingestellten Schweißparameter an eine Steuervorrichtung übergeben werden und anschließend das Schweißgerät bzw. die Stromquelle entsprechend den vorgegebenen Schweißparametern von der Steuervorrichtung angesteuert wird, wobei in einer Speichervorrichtung für die unterschiedlichen Schweißparameter unterschiedliche Soll-Werte hinterlegt sind, die bei Aufruf eines Schweißverfahrens oder eines Schweißparameters von der Steuervorrichtung ausgelesen werden und an der Ein- und/oder Ausgabevorrichtung angezeigt werden, **dadurch gekennzeichnet, dass** in der Speichervorrichtung die Soll-Werte für zumindest einen Schweißparameter eines Schweißverfahrens für die Minimum- und Maximum-Werte in Form einer Minimum-Kurve und einer Maximum-Kurve gespeichert werden, wobei bei Aufruf oder Einstellung eines Schweißparameters zwischen den Minimum- und Maximum-Kurven durch die Steuervorrichtung über ein Berechnungsverfahren, insbesondere über ein Interpolationsberechnungsverfahren, die weiteren Soll-Werte der weiteren Schweißparameter dieses Schweißverfahrens ermittelt werden.

2.  Verfahren nach Anspruch 1, **dadurch gekennzeichnet, dass** durch die Soll-Werte der gespeicherten Minimum- und Maximum-Werte bzw. -Kurve die Grenzwerte für die möglichen Schweißeinstellungen am Schweißgerät gebildet werden.

3.  Verfahren nach Anspruch 1 oder 2, **dadurch gekennzeichnet, dass** aufgrund der berechneten Soll-Werte eine selbständige bzw. automatische Einstellung des Schweißgerätes von der Steuervorrichtung durchgeführt wird.

4.  Verfahren nach einem oder mehreren der vorhergehenden Ansprüche, **dadurch gekennzeichnet, dass** die Minimum- und Maximum-Werte bzw. -Kurven in Abhängigkeit eines Schweißparameters, beispielsweise einer Fläche oder eines Querschnittes einer Schweißnaht, weitere Schweißparameter, wie beispielsweise eines Schweißstromes, einer Schweißgeschwindigkeit, usw. abgeleitet bzw. zugeordnet werden.

5.  Verfahren nach einem oder mehreren der vorhergehenden Ansprüche, **dadurch gekennzeichnet, dass** für die Berechnung der einzelnen Soll-Werte über die Ein- und/oder Ausgabevorrichtung zumindest ein Schweißparameter vorgegeben werden kann, wobei die weiteren Schweißparameter der Minimum- und Maximum-Werte bzw. -Kurven an diesen angepaßt werden.

6.  Verfahren nach einem oder mehreren der vorhergehenden Ansprüche, **dadurch gekennzeichnet, dass** über die Ein- und/oder Ausgabevorrichtung, insbesondere über einen Hauptregler, der Benutzer die errechneten Soll-Werte verändern kann.

**7.** Steuervorrichtung für ein Schweißgerät bzw. eine Stromquelle, bestehend aus einer mit der Steuervorrichtung, bevorzugt mit einer Mikroprozessorsteuerung, verbundenen Ein- und/oder Ausgabevorrichtung, einer Speichervorrichtung für Betriebsdaten und einem Leistungsteil, insbesondere einer Inverterstromquelle, wobei für eine Einstellung eines Schweißparameters bzw. eines Schweißverfahrens in der Speichervorrichtung des Schweißgerätes Soll-Werte hinterlegt sind, die bei Aufruf bzw. Aktivierung über die Ein- und/oder Ausgabevorrichtung einstellbar und/oder veränderbar sind, **dadurch gekennzeichnet, dass** die Soll-Werte der Schweißparameter für ein Schweißverfahren durch eine Minimum-Kurve und eine Maximum-Kurve gebildet sind, und dass Mittel vorhanden sind, durch welche bei Aufruf oder Einstellung eines Schweißparameters zwischen den Minimum- und Maximum-Kurven über ein Berechnungsverfahren die weiteren Soll-Werte der weiteren Schweißparameter dieses Schweißverfahrens ermittelt werden.

**8.** Steuervorrichtung nach Anspruch 7, **dadurch gekennzeichnet, dass** für unterschiedliche Schweißverfahren unterschiedliche Minimum- und Maximum-Werte bzw.-Kurven gespeichert sind.

**9.** Steuervorrichtung nach Anspruch 7 oder 8, **dadurch gekennzeichnet, dass** die Minimum- und Maximum-Werte bzw. -Kurven aus mehreren Schweißparametern gebildet sind.

**10.** Steuervorrichtung nach einem der Ansprüche 7 bis 9, **dadurch gekennzeichnet, dass** die Soll-Werte der Minimum- und Maximum Werte bzw. -Kurven die Grenzwerte der Schweißeinstellungen des Schweißgerätes (1) bilden.

**11.** Steuervorrichtung nach einem der Ansprüche7 bis 10, **dadurch gekennzeichnet, dass** in der Speichervorrichtung (29) für die Minimum- und Maximum-Werte bzw. -Kurven für einen Schweißparameter ein Minimum und Maximum-Soll-Wert hinterlegt ist, wobei in Abhängigkeit dieses Schweißparameters weitere Schweißparameter abgleitet bzw. zugeordnet sind.

**Claims**

**1.** Method of controlling a welding apparatus and a current source, in which various welding parameters such as a welding current, a welding wire diameter, a welding method, etc., can be set by a user via an input and/or output device, the set welding parameters being applied to a control device, after which the welding apparatus and the current source are activated by the control device in accordance with the pre-set welding parameters, various desired values for the different welding parameters being stored in a memory device which are read by the control device and displayed on the input and/or output device when a welding method or a welding parameter is retrieved, **characterised in that** the desired values for at least one welding parameter of a welding method are stored in the memory device for the minimum and maximum values in the form of a minimum and a maximum curve and, when a welding parameter falling between the minimum and maximum curves is retrieved or set, the control device determines the other desired values of the other welding parameters of this welding method by means of a computing method, in particular by means of an interpolation calculation.

**2.** Method as claimed in claim 1, **characterised in that** the threshold values for the possible welding settings on the welding apparatus can be formed from the desired values for the stored minimum and maximum values or curve.

**3.** Method as claimed in claim 1 or 2, **characterised in that** the welding apparatus is configured independently and automatically by the control device on the basis of the computed desired values.

**4.** Method as claimed in one or more of the preceding claims, **characterised in that** the minimum and maximum values or curves are derived from or associated with other welding parameters such as a welding current, a welding speed, etc., depending on a welding parameter, for example a surface area or a cross section of a weld seam.

**5.** Method as claimed in one or more of the preceding claims, **characterised in that** in order to calculate the individual desired values via the input and/or output device, at least one welding parameter can be set, the other welding parameters of the minimum and maximum values or curves being adjusted thereto.

**6.** Method as claimed in one or more of the preceding claims, **characterised in that** the user can edit the calculated desired values via the input and/or output device, in particular via a main controller.

7. Control device for a welding apparatus and a current source, consisting of an input and/or output device connected to the control device, preferably a microprocessor controller, a memory device for storing operating data and a power component, in particular an inverter current source, desired values being stored in the memory device of the welding apparatus for the purpose of setting up a welding parameter or a welding process, which can be set and/or edited via the input and/or output device when retrieved or activated, **characterised in that** the desired values of the welding parameters for a welding process are made up of a minimum and a maximum curve and means are provided, by means of which, when a welding parameter between the minimum and maximum curves is retrieved or set, the other desired values of the other welding parameters of this welding method are determined by a computation process.

8. Control device as claimed in claim 7, **characterised in that** different minimum and maximum values or curves are stored for different welding processes.

9. Control device as claimed in claim 7 or 8, **characterised in that** the minimum and maximum values or curves are made up of several welding parameters.

10. Control device as claimed in one of claims 7 to 9, **characterised in that** the desired values of the minimum and maximum values or curves form the threshold values of the welding settings of the welding apparatus (1).

11. Control device as claimed in one of claims 7 to 10, **characterised in that** a minimum and maximum desired value for a welding parameter is stored in the memory device (29) for the minimum and maximum values or curves, other welding parameters being derived from or associated with this welding parameter.

**Revendications**

1. Procédé de commande d'un appareil à souder respectivement d'une source de courant, où sont réglés par un dispositif d'entrée et/ou d'émission des paramètres de soudage différents, comme par exemple un courant de soudage, un diamètre du fil d'apport, un procédé de soudage etc., par un utilisateur, où les paramètres de soudage réglés sont transmis à un dispositif de commande et ensuite, l'appareil à souder respectivement la source de courant est commandé conformément aux paramètres de soudage prédéterminés par le dispositif de commande, où sont stockés dans un dispositif de stockage, pour les différents paramètres de soudage, différentes valeurs de consigne qui, lors de l'appel d'un procédé de soudage ou d'un paramètre de soudage sont lus par le dispositif de commande et sont affichés au dispositif d'entrée et/ou d'émission, **caractérisé en ce que** sont stockés dans le dispositif de stockage les valeurs de consigne pour au moins un paramètre de soudage d'un procédé de soudage pour les valeurs minima et maxima sous la forme d'une courbe de minima et d'une courbe de maxima, où lors de l'appel ou du réglage d'un paramètre de soudage entre les courbes minima et maxima, le dispositif de commande détermine par un procédé de calcul, notamment par un procédé de calcul à interpolation, les autres valeurs de consigne des autres paramètres de soudage de ce procédé de soudage.

2. Procédé selon la revendication 1, **caractérisé en ce que** par les valeurs de consigne des valeurs respectivement courbes minima et maxima stockées, les valeurs limites pour les réglages de soudage possibles sont formées à l'appareil à souder.

3. Procédé selon la revendication 1 ou 2, **caractérisé en ce que** sur la base des valeurs de consigne calculées, un réglage automatique de l'appareil à souder est effectué par le dispositif de commande.

4. Procédé selon l'une ou plusieurs des revendications précédentes, **caractérisé en ce que** sont déduits respectivement associés aux valeurs respectivement courbes minima et maxima, en fonction d'un paramètre de soudage, par exemple d'une surface ou d'une section transversale d'un cordon de soudure, d'autres paramètres de soudage, comme par exemple un courant de soudage, une vitesse de soudage etc.

5. Procédé selon l'une ou plusieurs des revendications précédentes, **caractérisé en ce que** pour le calcul des différentes valeurs de consigne par le dispositif d'entrée et/ou d'émission, au moins un paramètre de soudage peut être prédéterminé, où les autres paramètres de soudage des valeurs respectivement courbes minima et maxima sont adaptés à celui-ci.

6. Procédé selon l'une ou plusieurs des revendications précédentes, **caractérisé en ce que** par le dispositif d'entrée

**EP 1 098 729 B2**

et/ou d'émission, notamment par un régulateur principal, l'utilisateur peut modifier les valeurs de consigne calculées.

7. Dispositif de commande d'un appareil à souder respectivement d'une source de courant, constitué d'un dispositif d'entrée et/ou d'émission relié au dispositif de commande, de préférence à une commande à microprocesseur, un dispositif de stockage pour des données de fonctionnement et une partie de puissance, notamment une source de courant inverseur, où pour un réglage d'un paramètre de soudage respectivement d'un procédé de soudage, des valeurs de consigne sont stockées dans le dispositif de stockage de l'appareil à souder qui, lors de l'appel ou de l'activation sont réglables et/ou modifiables, par le dispositif d'entrée et/ou d'émission **caractérisé en ce que** les valeurs de consigne des paramètres de soudage sont formées pour un procédé de soudage par une courbe de minima et une courbe de maxima, et **en ce que** des moyens sont prévus par lesquels, lors de l'appel ou du réglage d'un paramètre de soudage entre les courbes minima et maxima, les autres valeurs de consigne des autres paramètres de soudage de ce procédé de soudage sont déterminées par un procédé de calcul.

8. Dispositif de commande selon la revendication 7, **caractérisé en ce que** sont stockées pour des procédés de soudage différents des valeurs respectivement courbes minima et maxima différentes.

9. Dispositif de commande selon la revendication 7 ou 8, **caractérisé en ce que** les valeurs respectivement courbes minima et maxima sont formées par plusieurs paramètres de soudage.

10. Dispositif de commande selon l'une des revendications 7 jusqu' à 9, **caractérisé en ce que** les valeurs de consigne des valeurs respectivement courbes minima et maxima constituent les valeurs limites des réglages de soudage de l'appareil à souder (1).

11. Dispositif de commande selon l'une des revendications 7 jusqu' à 10, **caractérisé en ce qu'**il est stocké dans le dispositif de stockage (29) pour les valeurs respectivement courbes minima et maxima, pour un paramètre de soudage, une valeur de consigne minimum et maximum, où sont dérivés respectivement associés en fonction de ce paramètre de soudage d'autres paramètres de soudage.

Fig.1

Fig.2

EP 1 098 729 B2

Fig.3

Fig.4

F1 F2    HOLD    JOB

V cm/min  A    V   :m

Fig.5

F1 F2    HOLD    JOB

V cm/min  A    V   :m

Fig.6

F1 F2    HOLD    JOB

V cm/min  A    V   :m

# Fig.7

EP 1 098 729 B2

82

71

77 78
76 10
10

75

16

15

81

15 69

80

70

73

80

74

72

79

81

18

16

81

16

4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0865858 A

- WO 9710919 A